# EUROPEAN PATENT APPLICATION

(11) **EP 4 778 869 A1**
(43) Date of publication of application: **22.07.2026**
(21) Application number: 24865194.5
(22) Date of filing: 23.08.2024
(51) Int. Cl.: B65H 39/16, B29C 63/02, B65H 20/02

(54) **LAMINATING DEVICE**

(30) Priority: 13.09.2023 JP 2023148708
(71) Applicant: Brother Kogyo Kabushiki Kaisha, Nagoya-shi, Aichi 467-8561 (JP)
(72) Inventor: SAKAI, Ryosuke, Nagoya-shi, Aichi 467-8562 (JP); WANG, Yuwen, Nagoya-shi, Aichi 467-8562 (JP); OOKA, Kazuaki, Nagoya-shi, Aichi 467-8562 (JP)
(74) Representative: J A Kemp LLP
(86) International application number: PCT/JP2024/029970
(87) International publication number: WO 2025/057690

(57) **Abstract**

There is provided a means capable of reducing the cost of a laminating apparatus.

A laminating apparatus 1 includes: a first holder 21 configured to support a first roll 111; a second holder 22 configured to support a second roll 112; an image recording unit 30 configured to record an image on a first member 101 drawn out from the first roll 111; lamination rollers 50 configured to laminate the first member 101 on which the image recording unit 30 has recorded an image and a second member 102 drawn out from the second roll 112 together; and a single common motor 70 configured to rotate both the second roll 112 and the lamination rollers 50.

## Description

### [Technical Field]

The present invention relates to a laminating apparatus that laminates a plurality of members together.

### [Background Art]

A laminating apparatus is known in the art that records an image on a first member drawn out from a first roll and laminates the first member, on which the image has been recorded, with a second member drawn out from a second roll (Patent Literature PTL 1, for example).

With the known apparatus described in the Patent Literature PTL 1, a printing unit forms a printed image on a recording medium drawn out from a recording media roll. The recording medium on which the printed image is formed is cut to a predetermined length by a first cutting unit, conveyed to a laminating unit, and superimposed on a laminate member drawn out from a laminate member roll by a guide roll in the laminating unit. The superimposed recording medium and laminate member are heated by pressure and heating rolls and then cut off by a second cutting unit. The recording media roll, the recording medium, the laminate member roll, and the laminate member correspond to the first roll, the first member, the second roll, and the second member, respectively.

### [Citation List]

### [Patent Literature]

[PTL 1] Japanese Patent Application Publication No. 2003-211593

### [Summary of Invention]

### [Technical Problem]

In the laminating apparatus, separately providing a drive source for the second roll and a drive source for a lamination roller that laminates the first member and the second member together increases the cost of the apparatus.

In view of the foregoing, it is an object of the present invention to provide a means for reducing the cost of the laminating apparatus.

### [Solution to Problem]

(1) The present invention provides a laminating apparatus. The laminating apparatus includes: a first supporting portion; a second supporting portion; an image recording unit; a lamination roller; and a single drive source. The first supporting portion is configured to support a first roll. The first roll is a first member that is wound into a roll. The second supporting portion is configured to support a second roll. The second roll is a second member that is wound into a roll. The image recording unit is configured to record an image on the first member that has been drawn out from the first roll. The lamination roller is configured to laminate the first member on which the image recording unit has recorded an image and the second member that has been drawn out from the second roll together. The drive source is configured to rotate both the second roll and the lamination roller.
   According to the laminating apparatus described above, the second roll and the lamination roller are driven by a single drive source, thereby reducing the cost of the laminating apparatus.
(2) It is preferable that the drive source includes a rotating portion. The rotating portion may be rotatable in a first direction and a second direction opposite the first direction. When the rotating portion rotates in the first direction, the second member may be conveyed in a direction for drawing out the second member from the second roll. When the rotating portion rotates in the second direction, the second member may be convened in a direction for taking up the second member onto the second roll.
(3) It is preferable that the drive source includes a rotating portion. The rotating portion may be rotatable in a first direction and a second direction opposite the first direction. It is also preferable that the laminating apparatus further includes: a first transmission unit; and a second transmission unit. The first transmission unit may be configured to transmit, to the second roll, a rotational force of the rotating portion in the first direction as a rotational force in a direction for taking up the second member. The second transmission unit may be configured to transmit, to the lamination roller, a rotational force of the rotating portion in the first direction as a rotational force in a direction for drawing out the second member.
(4) It is preferable that the first transmission unit is configured to transmit, to the second roll, a rotational force of the rotating portion in the second direction as a rotational force in a direction for taking up the second member. It is also preferable that the second transmission unit is configured to transmit, to the lamination roller, a rotational force of the rotating portion in the second direction as a rotational force in a direction for taking up the second member.
(5) It is preferable that the first transmission unit is configured to transmit, to the second roll, a rotational force of the rotating portion in the second direction as a rotational force in a direction for taking up the second member. It is also preferable that the second transmission unit is configured to transmit, to the lamination roller, a rotational force of the rotating portion in the second direction as a rotational force in a direction for drawing out the second member.
(6) It is preferable that the first transmission unit is configured to transmit, to the second roll, a rotational force of the rotating portion in the second direction as a rotational force in a direction for taking up the second member. It is also preferable that the second transmission unit includes a transmission control unit. The transmission control unit may be configured to prevent, when the rotating portion rotates in the second direction, a rotational force of the rotating portion from being transmitted to the lamination roller.
(7) It is preferable that the first transmission unit is configured to transmit, to the second roll, a rotational force of the rotating portion in the second direction as a rotational force in a direction for taking up the second member. It is also preferable that the second transmission unit includes a locking portion. The locking portion may be configured to lock, when the rotating portion rotates in the second direction, rotation of the lamination roller.
(8) It is preferable that the first transmission unit includes a first transmission path and a second transmission path for transmitting a rotational force of the rotating portion to the second roll. The first transmission path may include a torque limiter along a path. The second transmission path may not include a torque limiter along a path. When the rotating portion rotates in the first direction, a rotational force limited by the torque limier may be transmitted to the second roll via the first transmission path. When the rotating portion rotates in the second direction, a rotational force not limited by the torque limiter may be transmitted to the second roll via the second transmission path.
(9) It is preferable that the second transmission path includes a one-way clutch along a path. It is also preferable that the first transmission unit further includes a detecting portion. The detecting portion may be disposed at least one of: downstream relative to the torque limiter along the first transmission path; and downstream relative to the one-way clutch along the second transmission path. The detecting portion may be configured to detect a rotated amount of a member within the first transmission unit.
(10) It is preferable that the second transmission unit includes a torque limiter.
(11) It is preferable that each of the first transmission unit and the second transmission unit includes at least one of a gear and a belt.
(12) It is preferable that the drive source includes a single motor.
(13) Preferably, when the rotating portion rotates in the second direction in a state where an amount of the second member wound into the second roll is minimum, a rotational force may be applied to the second roll and the lamination roller such that a circumferential speed of the second member wound on the second roll becomes greater than a circumferential speed of the lamination roller.
(14) It is preferable that the drive source includes a rotating portion. The rotating portion may be rotatable in a first direction and a second direction opposite the first direction. It is also preferable that the laminating apparatus further includes: a first transmission unit; and a second transmission unit. The first transmission unit may be configured to transmit a rotational force of the rotating portion to the second roll. The second transmission unit may be configured to transmit a rotational force of the rotating portion to the lamination roller. The first transmission unit may include a first torque limiter. The first transmission unit may be configured to transmit a rotational force of the rotating portion in the first direction to the second roll via the first torque limiter and transmit a rotational force of the rotating portion in the second direction to the second roll without passing through the first torque limiter. The second transmission unit may include a second torque limiter. The second transmission unit may be configured to transmit each of a rotational force of the rotating portion in the first direction and a rotational force of the rotating portion in the second direction to the lamination roller via the second torque limiter.
(15) It is preferable that the laminating apparatus further includes a control unit. The control unit may be configured to perform, as a skew correction control for the second member: at least one draw-out operation; and at least one take-up operation. The draw-out operation may include drawing out the second member from the second roll. The take-up operation may include taking up the second member onto the second roll.
(16) It is preferable that the laminating apparatus further includes: a member sensor. The member sensor may be disposed downstream relative to the lamination roller. The member sensor may be configured to detect the second member. The control unit may be configured to perform: switching. The switching may switch, based on an output signal from the member sensor, between execution of the draw-out operation and execution of the take-up operation.
(17) It is preferable that the laminating apparatus further includes a width-direction sensor. The width-direction sensor may be configured to detect a position in a width direction of the second member. The control unit may be configured to perform: detecting; and controlling. The detecting may detect, based on an output signal form the width-direction sensor, a skewed state of the second member. The controlling may control, based on the detected skewed state, execution of the draw-out operation and the take-up operation.
(18) The present invention also provides a laminating apparatus. The laminating apparatus includes: a supply unit; a second supporting portion; an image recording unit; a lamination roller; and a single drive source. The supply unit is configured to supply a first member. The second supporting portion is configured to support a second roll. The second roll is a second member that is wound into a roll. The image recording unit is configured to record an image on the first member supplied by the supply unit. The lamination roller is configured to laminate the first member on which the image recording unit has recorded an image and the second member that has been drawn out from the second roll together. The drive source is configured to rotate both the second roll and the lamination roller.

According to the laminating apparatus described above, the second roll and the lamination roller are driven by a single drive source, thereby reducing the cost of the laminating apparatus.

### [Advantageous Effects of Invention]

According to the present invention, the second roll and the lamination roller are driven by a single drive source, thereby reducing the cost of the laminating apparatus.

### [Brief Description of Drawings]

[Fig. 1] Fig. 1A is an external perspective view of a laminating apparatus 1 according to an embodiment of the present invention; and Fig. 1B is a schematic cross-sectional view of a finished laminated product 100 generated by the laminating apparatus 1.
[Fig. 2] Fig. 2 is a vertical cross-sectional view of the laminating apparatus 1.
[Fig. 3] Fig. 3 is a block diagram of the laminating apparatus 1.
[Fig. 4] Fig. 4 is a diagram illustrating a first transmission unit 71 and a second transmission unit 72 of the laminating apparatus 1.
[Fig. 5] Fig. 5A is a diagram illustrating transmission paths of rotational forces in the first transmission unit 71 and the second transmission unit 72; Fig. 5B is a diagram illustrating directions of rotational forces transmitted by the first transmission unit 71 and the second transmission unit 72 when a common motor 70 of the laminating apparatus 1 rotates in a forward direction; and Fig. 5C is a diagram illustrating directions of rotational forces transmitted by the first transmission unit 71 and the second transmission unit 72 when the common motor 70 rotates in a reverse direction.
[Fig. 6] Fig. 6 is a diagram illustrating directions of the rotational forces transmitted by the first transmission unit 71 and the second transmission unit 72 when the common motor 70 rotates in the forward direction.
[Fig. 7] Fig. 7 is a diagram illustrating directions of the rotational forces transmitted by the first transmission unit 71 and the second transmission unit 72 when the common motor 70 rotates in the reverse direction.
[Fig. 8] Fig. 8 is a flowchart illustrating steps in a laminating process performed by a control unit 90 of the laminating apparatus 1.
[Fig. 9] Fig. 9A is a diagram illustrating the laminating apparatus 1 before execution of the laminating process; Figs. 9B and 9C are diagrams illustrating the laminating apparatus 1 during execution of a skew correction control; and Fig. 9D is a diagram illustrating the laminating apparatus 1 after a first member 101 is held between second conveying rollers 42.
[Fig. 10] Fig. 10A is a diagram illustrating the laminating apparatus 1 during execution of a slack elimination control; Fig. 10B is a diagram illustrating the laminating apparatus 1 while conveying the first member 101; Fig. 10C is a diagram illustrating the laminating apparatus 1 during recording images; and Fig. 10D is a diagram illustrating the laminating apparatus 1 while conveying the first member 101 after driving of lamination rollers 50 has started.
[Fig. 11] Fig. 11A is a diagram illustrating the laminating apparatus 1 after the first member 101 has been conveyed to a cutting position of a first cutting unit 68; Fig. 11B is a diagram illustrating the laminating apparatus 1 after the first cutting unit 68 has performed cutting; Fig. 11C is a diagram illustrating the laminating apparatus 1 after a second cutting unit 69 has performed cutting; and Fig. 11D is a diagram illustrating the laminating apparatus 1 during execution of a take-up operation.
[Fig. 12] Fig. 12A is a diagram illustrating a second member 102 being drawn out during the skew correction control; and Fig. 12B is a diagram illustrating the second member 102 being taken up during the skew correction control.
[Fig. 13] Fig. 13 is a diagram illustrating the first transmission unit 71 and a second transmission unit 75 of a laminating apparatus according to a variation.
[Fig. 14] Fig. 14A is a diagram illustrating transmission paths of rotational forces in the first transmission unit 71 and the second transmission unit 75; Fig. 14B is a diagram illustrating directions of rotational forces transmitted by the first transmission unit 71 and the second transmission unit 75 when the common motor 70 rotates in the forward direction; and Fig. 14C is a diagram illustrating directions of rotational forces transmitted by the first transmission unit 71 and the second transmission unit 75 when the common motor 70 rotates in the reverse direction.
[Fig. 15] Fig. 15 is a diagram illustrating directions of the rotational forces transmitted by the first transmission unit 71 and the second transmission unit 75 when the common motor 70 rotates in the forward direction.
[Fig. 16] Fig. 16 is a diagram illustrating directions of the rotational forces transmitted by the first transmission unit 71 and the second transmission unit 75 when the common motor 70 rotates in the reverse direction.
[Fig. 17] Fig. 17 is a diagram illustrating the first transmission unit 71 and a second transmission unit 76 of a laminating apparatus according to another variation.
[Fig. 18] Fig. 18A is a diagram illustrating a locking portion 55 in an unlocked state in a laminating apparatus according to another variation; and Fig. 18B is a diagram illustrating the locking portion 55 in a locked state.
[Fig. 19] Fig. 19A is a diagram illustrating a locking portion 56 in an unlocked state in a laminating apparatus according to another variation; and Fig. 19B is a diagram illustrating the locking portion 56 in a locked state.
[Fig. 20] Fig. 20 is a diagram illustrating a first transmission unit 77 and a second transmission unit 78 of a laminating apparatus according to another variation.
[Fig. 21] Fig. 21A is a diagram illustrating a position at which a width-direction sensor 64 is arranged in a laminating apparatus according to another variation; and Fig. 21B is a diagram illustrating positions at which width-direction sensors 65 and 64 are arranged in a laminating apparatus according to still another variation.
[Fig. 22] Fig. 22 is a vertical cross-sectional view of a laminating apparatus 2 according to a variation.

### [Description of Embodiments]

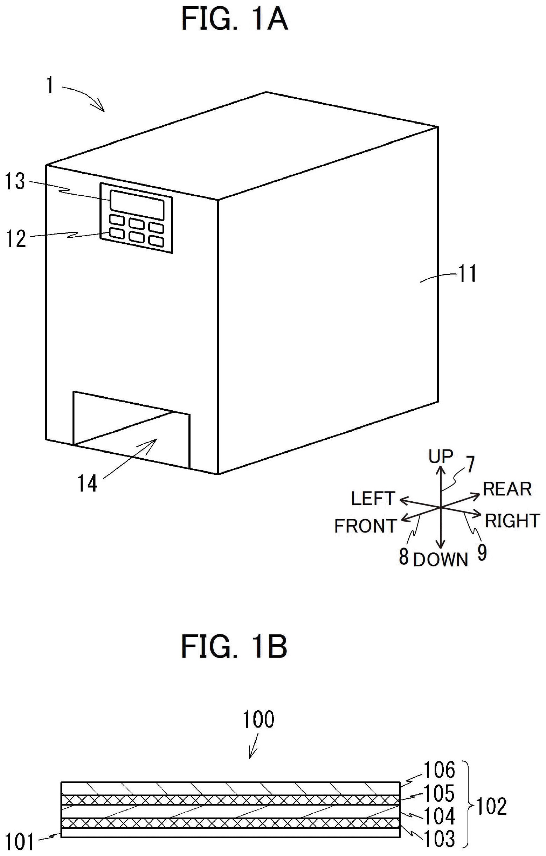

Below, a laminating apparatus 1 according to an embodiment of the present invention will be described. Note that the following embodiment is merely one example of the present invention and that the present embodiment may be modified as appropriate without departing from the scope of the present invention. In the following description, the advancement from a start point to an end point of an arrow is expressed as a bearing, while advancement in either of the opposing directions along a line connecting the start point and the end point of an arrow is expressed as a direction. An up-down direction 7 is defined based on the orientation of the laminating apparatus 1 when the laminating apparatus 1 is disposed in its operable state (the state illustrated in Fig. 1A). A front-rear direction 8 is defined with the surface on which an operation unit 12 and a display unit 13 are disposed being designated as the front surface. A left-right direction 9 is defined from the perspective of an observer facing the front side of the laminating apparatus 1. The up-down direction 7, the front-rear direction 8, and the left-right direction 9 are orthogonal to each other.

### < Overview of Laminating Apparatus 1 >

As illustrated in Fig. 1A, the laminating apparatus 1 according to the present embodiment has a housing 11 with a rectangular parallelepiped shape. An operation unit 12 and a display unit 13 are disposed on the front surface of the housing 11. The front surface of the housing 11 has a discharge opening 14 below the operation unit 12 and the display unit 13. The laminating apparatus 1 laminates two types of members together to generate a finished laminated product 100.

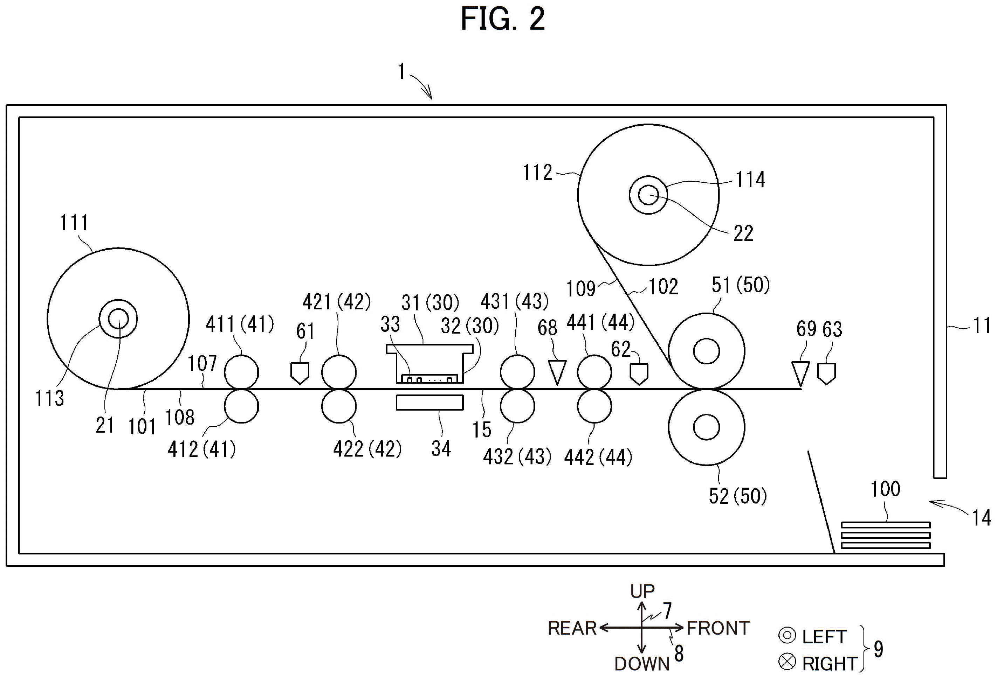

A tape-shaped first member 101 and a tape-shaped second member 102 are provided in the laminating apparatus 1. As illustrated in Fig. 2, the first member 101 is wound about a cylindrical core member 113 to form a first roll 111, and the second member 102 is wound about a cylindrical core member 114 to form a second roll 112. The first roll 111 and the second roll 112 are respectively mounted on a first holder 21 and a second holder 22 in the laminating apparatus 1.

The first member 101 is a transparent film, for example. As illustrated in Fig. 1B, the second member 102 has an adhesive layer on at least one surface. The second member 102 is a backing paper having a tape layer 104, a first adhesive layer 103 on one surface of the tape layer 104 (the surface on the side of the first member 101 in the finished laminated product 100), and a second adhesive layer 105 on the other surface of the tape layer 104, for example. A release sheet 106 is disposed on the opposite side of the second adhesive layer 105 from the tape layer 104.

The materials of the first member 101 and the second member 102 are not limited. For example, the second member 102 may be a resinous member such as PET or PVC (polyvinyl chloride), a synthetic paper such as YUPO (registered trademark) paper, or a metal member. The second member 102 may be transparent or opaque. Each of the first member 101 and the second member 102 may have an adhesive layer on one surface, on the other surface, on both surfaces, or on neither surface. When a material with no adhesive layer is used, the first member 101 and the second member 102 may be laminated together after an adhesive has been applied or may be laminated together through heat fusion or pressure joining, for example.

As illustrated in Fig. 2, the first member 101 has a recording surface 107 on which images are recorded, and a back surface 108 on the side opposite the recording surface 107. The second member 102 has a lamination surface 109 on which the first adhesive layer 103 is formed.

The laminating apparatus 1 laminates the first member 101 and the second member 102 together by bringing the recording surface 107 of the first member 101 into close contact with the lamination surface 109 of the second member 102. The laminating apparatus 1 then cuts the laminated members into a predetermined size, thereby generating a finished laminated product 100 illustrated in Fig. 1B. The finished laminated product 100 generated through this process is discharged through the discharge opening 14.

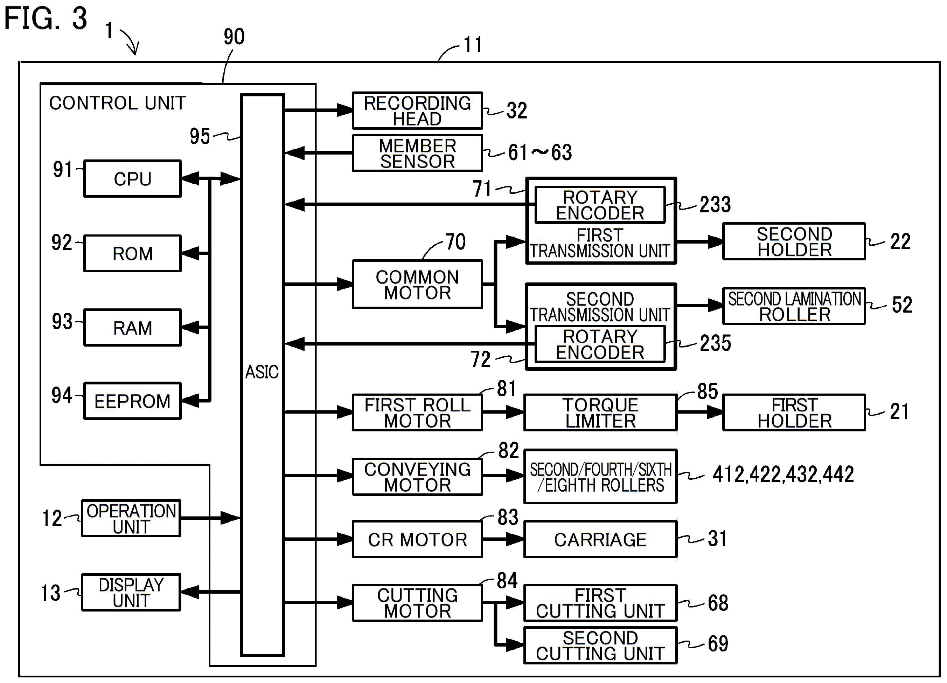

As illustrated in Fig. 2, the laminating apparatus 1 includes, inside the housing 11, a first holder 21, a second holder 22, an image recording unit 30, first through fourth conveying rollers 41 through 44, lamination rollers 50, member sensors 61 through 63, a first cutting unit 68, and a second cutting unit 69. The laminating apparatus 1 additionally includes, inside the housing 11, a control unit 90 and various motors (see Fig. 3). The laminating apparatus 1 further includes guide members (not illustrated) that support the first member 101. The guide members are arranged at appropriate positions within the housing 11. This arrangement forms a conveying path 15 that leads from the first holder 21 to the second cutting unit 69 via the image recording unit 30, the first cutting unit 68, and the lamination rollers 50.

### < First Holder 21 and Second Holder 22 >

Each of the first holder 21 and the second holder 22 is a rotatable member that can rotate about an axis extending in the left-right direction 9. The first holder 21 has a thickness equivalent to the inner diameter in the core member 113 of the first roll 111. The second holder 22 has a thickness equivalent to the inner diameter in the core member 114 of the second roll 112. Each of the first holder 21 and the second holder 22 is fixed either to the housing 11 or to a member fixed to the housing 11.

The first holder 21 and the second holder 22 are arranged in the housing 11 at positions spaced apart from each other. In the configuration illustrated in Fig. 2, the first holder 21 is disposed near the center of the housing 11 in the up-down direction 7 and in the rear portion of the housing 11 in the front-rear direction 8. The second holder 22 is disposed in the upper portion of the housing 11 in the up-down direction 7 and frontward relative to the center of the housing 11 in the front-rear direction 8. However, the positions of the first holder 21 and the second holder 22 within the housing 11 are not limited to these examples and may be set as desired.

Before the laminating apparatus 1 operates, the first roll 111 is mounted on the first holder 21, and the second roll 112 is mounted on the second holder 22. The first holder 21 supports the first roll 111 so that the first roll 111 is rotatable. The second holder 22 supports the second roll 112 so that the second roll 112 is rotatable. The first member 101 is drawn out from the first roll 111 supported by the first holder 21. The second member 102 is drawn out from the second roll 112 supported by the second holder 22. The first holder 21 is an example of the first supporting portion. The second holder 22 is an example of the second supporting portion.

### < Image Recording Unit 30 >

The image recording unit 30 is disposed downstream relative to the first roll 111 along the conveying path 15. The image recording unit 30 is disposed upward relative to the conveying path 15 in the up-down direction 7 and is positioned between the first roll 111 and the first cutting unit 68 in the front-rear direction 8. The image recording unit 30 includes a carriage 31 and a recording head 32. Two guide rails (not illustrated) are disposed inside the housing 11. The guide rails extend in the left-right direction 9 and both ends of the guide rails are fixed to the housing 11 or to members fixed to the housing 11. The carriage 31 is supported on the guide rails. The carriage 31 moves in the left-right direction 9 when receiving a drive force from a CR motor 83 (see Fig. 3).

The recording head 32 is mounted on the carriage 31. A plurality of nozzles 33 are formed in the lower surface of the recording head 32. The recording head 32 moves in the left-right direction 9 along with the movement of the carriage 31. A platen 34 is disposed downward relative to the moving range of the carriage 31. While moving in the left-right direction 9, the recording head 32 ejects ink downward from the nozzles 33, thereby recording an image on the recording surface 107 of the first member 101 as the first member 101 is conveyed over the platen 34. In this way, the image recording unit 30 records images on the first member 101 drawn out from the first member 101.

### < First through Fourth Conveying Rollers 41 through 44 >

The first through fourth conveying rollers 41 through 44 are positioned between the first roll 111 and the lamination rollers 50. Specifically, the first conveying rollers 41 and the second conveying rollers 42 are positioned between the first roll 111 and the image recording unit 30 in the front-rear direction 8, while the third conveying rollers 43 and the fourth conveying rollers 44 are positioned between the image recording unit 30 and the lamination rollers 50 in the front-rear direction 8. The second conveying rollers 42 are disposed frontward relative to the first conveying rollers 41 in the front-rear direction 8. The fourth conveying rollers 44 are disposed frontward relative to the third conveying rollers 43 in the front-rear direction 8.

The first conveying rollers 41 include a first roller 411 and a second roller 412. The first roller 411 is disposed directly above the second roller 412. The first member 101 passes between the first roller 411 and the second roller 412. At this time, the first roller 411 contacts the recording surface 107 of the first member 101 and the second roller 412 contacts the back surface 108 of the first member 101. In this way, the first conveying rollers 41 hold the first member 101 therebetween. The first conveying rollers 41 hold the first member 101 therebetween at a position located between the first roll 111 and the lamination rollers 50.

Upon receiving a drive force from a conveying motor 82 (see Fig. 3), the second roller 412 rotates about an axis extending in the left-right direction 9. As the second roller 412 rotates, the first roller 411 also rotates about an axis extending in the left-right direction 9. At this time, a force is applied to the first member 101 in a direction for drawing out the first member 101 from the first roll 111. Upon receiving a drive force in the reverse direction from the conveying 82, the second roller 412 rotates in the reverse direction, and the first roller 411 also rotates in the reverse direction along with the rotation of the second roller 412. At this time, a force is applied to the first member 101 in a direction for bringing the first member 101 closer to the first roll 111.

The second conveying rollers 42 include a third roller 421 and a fourth roller 422. The third conveying rollers 43 include a fifth roller 431 and a sixth roller 432. The fourth conveying rollers 44 include a seventh roller 441 and an eighth roller 442. Since the second through fourth conveying rollers 42 through 44 have the same configuration and function as the first conveying rollers 41, a description of this configuration and function has been omitted. As with the first conveying rollers 41, each pair of the second through fourth conveying rollers 42 through 44 hold the first member 101 at a position located between the first roll 111 and the lamination rollers 50.

Of the pair of rollers constituting each of the first through fourth conveying rollers 41 through 44, the lower roller receives the drive force from the conveying motor 82 in the present embodiment. However, the upper roller may instead be configured to receive the drive force from the conveying motor 82, or both the upper and lower rollers may receive the drive force from the conveying motor 82.

### < Lamination Rollers 50 >

The lamination rollers 50 are disposed downstream relative to the image recording unit 30 along the conveying path 15. The lamination rollers 50 are positioned between the first cutting unit 68 and the second cutting unit 69 in the front-rear direction 8. The lamination rollers 50 include a first lamination roller 51 and a second lamination roller 52. The first lamination roller 51 is disposed directly above the second lamination roller 52. The first lamination roller 51 and the second lamination roller 52 hold the first member 101 and the second member 102 therebetween with a predetermined pressure. Hence, the first lamination roller 51 and the second lamination roller 52 laminate the first member 101 and the second member 102 together to generate a finished laminated product 100.

The second member 102 drawn out from the second roll 112 enters between the first lamination roller 51 and the second lamination roller 52. At this time, the lamination surface 109 of the second member 102 faces downward. After passing the image recording unit 30 and the first cutting unit 68, the first member 101 enters beneath the second member 102 between the first lamination roller 51 and the second lamination roller 52. At this time, the recording surface 107 of the first member 101 faces upward.

Upon receiving a drive force from a common motor 70 (see Fig. 3), the second lamination roller 52 rotates about an axis extending in the left-right direction 9. As the second lamination roller 52 rotates, the first lamination roller 51 also rotates about an axis extending in the left-right direction 9. The first lamination roller 51 and the second lamination roller 52 laminate the first member 101 and the second member 102 together by bringing the recording surface 107 of the first member 101 into close contact with the lamination surface 109 of the second member 102. As an alternative, the first lamination roller 51 may receive the drive force from the common motor 70, or both the first lamination roller 51 and the second lamination roller 52 may receive the drive force from the common motor 70. Furthermore, the lamination rollers 50 do not necessarily need to laminate the first member 101 and the second member 102 together. For example, when the laminating apparatus 1 includes, downstream of the lamination rollers 50, a portion that performs thermal welding or pressure bonding, a pair of rollers arranged upstream of such a portion and configured to overlap the first member 101 and the second member 102 may serve as the lamination rollers 50. That is, the lamination rollers 50 may also be rollers that overlap the first member 101 and the second member 102.

### < First Cutting Unit 68 >

The first cutting unit 68 is disposed downstream relative to the image recording unit 30 along the conveying path 15. The first cutting unit 68 is disposed upward relative to the conveying path 15 in the up-down direction 7 and between the third conveying rollers 43 and the fourth conveying rollers 44 in the front-rear direction 8. The first cutting unit 68 cuts the first member 101 at a position located between the second conveying rollers 42 and the lamination rollers 50.

The first cutting unit 68 may have any configuration capable of cutting the first member 101. For example, the first cutting unit 68 may include a cutter carriage that moves in the left-right direction 9 when receiving a drive force from a cutting motor 84 (see Fig. 3), and a cutter mounted on the cutter carriage. Alternatively, the first cutting unit 68 may include a movable blade that moves in the up-down direction 7 when receiving a drive force from the cutting motor 84, and a fixed blade that opposes the movable blade.

### < Second Cutting Unit 69 >

The second cutting unit 69 is disposed downstream relative to the lamination rollers 50 along the conveying path 15. The second cutting unit 69 is disposed upward relative to the conveying path 15 in the up-down direction 7 and frontward relative to the lamination rollers 50 in the front-rear direction 8. The second cutting unit 69 simultaneously cuts the first member 101 and the second member 102, which have been laminated together by the lamination rollers 50, at a position downstream relative to the lamination rollers 50 in a conveying direction.

The second cutting unit 69 may have any configuration capable of cutting the first member 101 and the second member 102. For example, as with the first cutting unit 68, the second cutting unit 69 may include a cutter carriage that moves in the left-right direction 9 and a cutter or may include a movable blade that moves in the up-down direction 7 and a fixed blade that opposes the movable blade.

### < Member Sensors 61 through 63 >

Each of the member sensors 61 through 63 is disposed upward relative to the conveying path 15 in the up-down direction 7. The member sensor 61 is positioned between the first conveying rollers 41 and the second conveying rollers 42 in the front-rear direction 8. The member sensor 62 is positioned between the fourth conveying rollers 44 and the lamination rollers 50 in the front-rear direction 8. The member sensor 63 is disposed frontward relative to the second cutting unit 69 in the front-rear direction 8. The member sensor 63 may be disposed downstream relative to the lamination rollers 50 along the conveying path 15.

The member sensor 61 includes a light-emitting element (not illustrated) that emits light toward the recording surface 107 of the first member 101 being conveyed along the conveying path 15, and a light-receiving element (not illustrated) that receives light reflected off the recording surface 107 of the first member 101. When the first member 101 is present beneath the member sensor 61, the light-receiving element of the member sensor 61 receives light reflected off the recording surface 107 of the first member 101, and the amount of light detected by the light-receiving element is greater than a threshold value. On the other hand, when the first member 101 is not present beneath the member sensor 61, the light-receiving element of the member sensor 61 does not receive light reflected off the recording surface 107 of the first member 101, and the amount of light detected by the light-receiving element is less than the threshold value. The member sensor 62 has the same configuration as the member sensor 61.

The member sensor 63 includes a light-emitting element (not illustrated) that emits light toward a surface opposite the lamination surface 109 (hereinafter referred to as an "opposite surface") of the second member 102 held between the lamination rollers 50, and a light-receiving element (not illustrated) that receives light reflected off the opposite surface of the second member 102. When the second member 102 is present beneath the member sensor 63, the light-receiving element of the member sensor 63 receives light reflected off the opposite surface of the second member 102, and the amount of light detected by the light-receiving element is greater than a threshold value. On the other hand, when the second member 102 is not present beneath the member sensor 63, the light-receiving element of the member sensor 63 does not receive light reflected off the opposite surface of the second member 102, and the amount of light detected by the light-receiving element is less than the threshold value.

Although the member sensors 61 through 63 each including a light-emitting element and a light-receiving element are disposed upward relative to the conveying path 15 in the present embodiment, the member sensors 61 through 63 having the same configuration may instead be disposed downward relative to the conveying path 15.

### < Control Unit 90 and Its Peripheral Components >

As illustrated in Fig. 3, the control unit 90 includes a CPU 91, a ROM 92, a RAM 93, and an EEPROM 94. The ROM 92 stores a program for controlling various operations of the laminating apparatus 1. The EEPROM 94 stores various data used when the CPU 91 executes the above program. The RAM 93 is used as a storage area for temporarily storing various data used when the CPU 91 executes the above program, and as an area for developing data and programs. When the power to the laminating apparatus 1 is turned on, a copy of the program stored in the ROM 92 is transferred to the RAM 93. The CPU 91 executes the program stored in the RAM 93, whereby the control unit 90 performs various control.

An ASIC 95 is connected to the operation unit 12 and the display unit 13. The operation unit 12 detects when operating keys are pressed and outputs signals corresponding to the pressed operating keys. The control unit 90 identifies the pressed operating keys based on the output signals received from the operation unit 12. The display unit 13 displays information related to the operations of the laminating apparatus 1 on a screen based on instructions received from the control unit 90.

The ASIC 95 is also connected to the recording head 32. The control unit 90 outputs signals to the recording head 32 via the ASIC 95 based on image data. In accordance with the signals outputted from the control unit 90, the recording head 32 ejects ink from the nozzles 33 formed in the recording head 32.

The ASIC 95 is also connected to the member sensors 61 through 63. Each of the member sensors 61 through 63 outputs signals corresponding to the amount of light detected by the light-receiving element thereof. The control unit 90 determines, based on signals outputted from the light-receiving units of the member sensors 61 through 63, whether the first member 101 or the second member 102 is present at the respective positions where the member sensors 61 through 63 are disposed.

### < Various Motors >

The ASIC 95 is connected to the common motor 70, a first roll motor 81, the conveying motor 82, a CR motor 83, and the cutting motor 84. The ASIC 95 has built-in drive circuits for controlling these motors. The control unit 90 outputs drive signals for rotating respective motors to the drive circuits corresponding to the respective motors. Each drive circuit outputs a drive current based on the drive signal outputted from the control unit 90 to the corresponding motor, thereby causing the corresponding motor to rotate. Some of the motors described above may be configured of the same motor.

The common motor 70 is a single motor that rotates both the second roll 112 supported by the second holder 22 and the lamination rollers 50. The common motor 70 generates power for rotating the second roll 112 and the lamination rollers 50. A first transmission unit 71 is interposed between the common motor 70 and the second holder 22. The first transmission unit 71 transmits a rotational force of the common motor 70 to the second roll 112. A second transmission unit 72 is interposed between the common motor 70 and the second lamination roller 52. The second transmission unit 72 transmits a rotational force of the common motor 70 to the second lamination roller 52.

The first roll motor 81 generates power for rotating the first roll 111 supported by the first holder 21. A torque limiter 85 is interposed between the first roll motor 81 and the first holder 21. The torque limiter 85 is mounted, for example, on the rotational shaft of the first holder 21. The torque limiter 85 limits the power of the first roll motor 81 and transmits the limited power to the rotational shaft of the first holder 21.

The conveying motor 82 generates power for rotating the first through fourth conveying rollers 41 through 44. The power generated by the conveying motor 82 is transmitted to the second roller 412, the fourth roller 422, sixth roller 432, and the eighth roller 442.

The control unit 90 drives the common motor 70 to apply a force to the second roll 112 and to rotate the lamination rollers 50. The control unit 90 drives the first roll motor 81 to apply a force to the first roll 111, and drives the conveying motor 82 to rotate the first through fourth conveying rollers 41 through 44. The control unit 90 further drives the CR motor 83 to move the carriage 31, and drives the cutting motor 84 to operate the first cutting unit 68 and the second cutting unit 69.

### < First Transmission Unit 71 and Second Transmission Unit 72 >

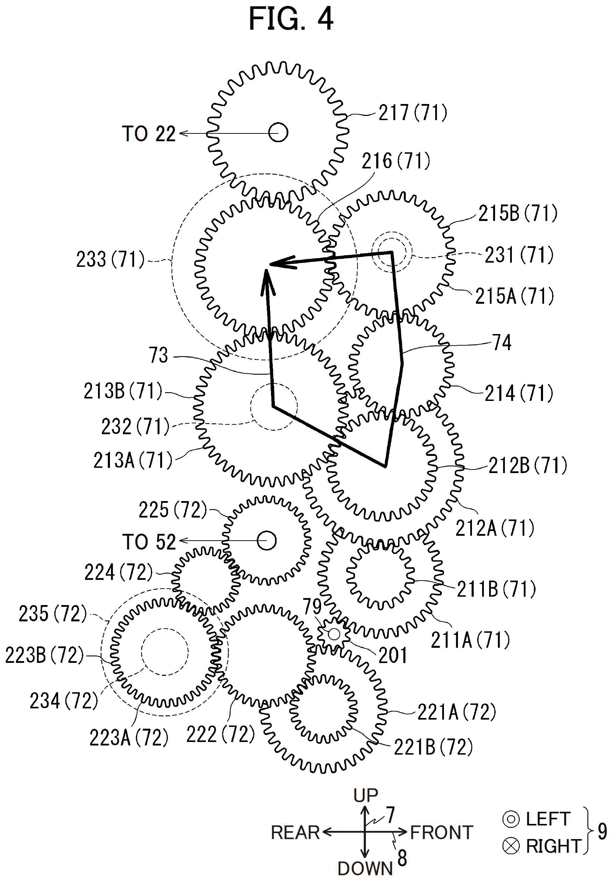

Hereinafter, rotation in a clockwise direction (clockwise rotation) and rotation in a counterclockwise direction (counterclockwise rotation) are defined with reference to Fig. 4. A rotational shaft 79 illustrated in Fig. 4 is the rotational shaft of the common motor 70. The rotational shaft 79 is rotatable in the counterclockwise direction and in the clockwise direction, which is opposite the counterclockwise direction. Note that Fig. 4 schematically illustrates a gear train and does not accurately depict the arrangement and sizes of the gears and the geometry of the gear teeth, for example. Furthermore, the common motor 70 is an example of the drive source. The rotational shaft 79 is an example of the rotating portion. The counterclockwise direction is an example of the first direction. The clockwise direction is an example of the second direction.

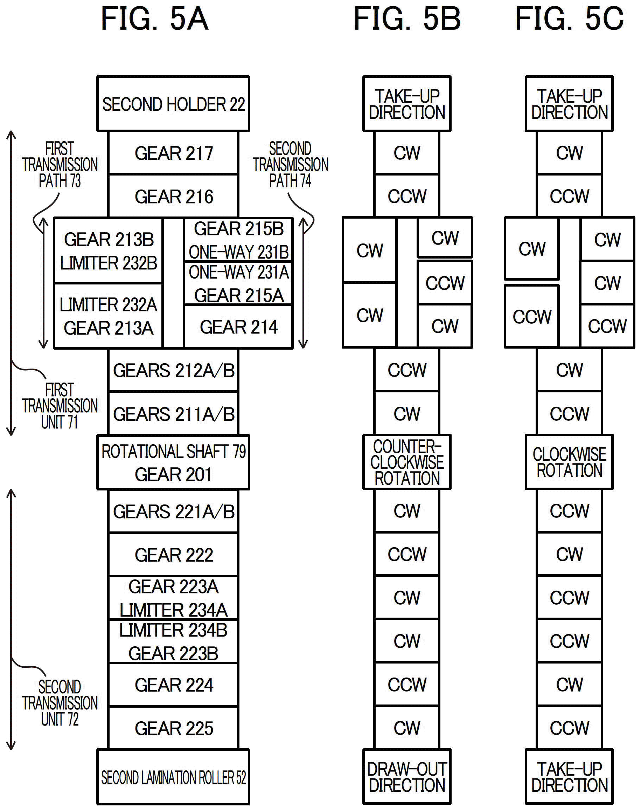

A gear 201 is attached to the rotational shaft 79 of the common motor 70 and rotates together with the rotational shaft 79. As illustrated in Figs. 4 and 5A, the first transmission unit 71 includes gears 211A, 211B, 212A, 212B, 213A, 213B, 214, 215A, 215B, 216, and 217, a one-way clutch 231, a torque limiter 232, and a rotary encoder 233. The second transmission unit 72 includes gears 221A, 221B, 222, 223A, 223B, 224, and 225, a torque limiter 234, and a rotary encoder 235.

The gear 213A and the gear 213B are disposed at the same position in the up-down direction 7 and in the front-rear direction 8 and share the same rotational shaft. Therefore, the gear 213A and the gear 213B are illustrated as a single gear at the same position in Fig. 4. The same applies to the gear 215A and the gear 215B, and to the gear 223A and the gear 223B. In Fig. 5, "ONE-WAY," "LIMITER," "CW," and "CCW" indicate a one-way clutch, a torque limiter, clockwise rotation, and counterclockwise rotation, respectively.

The gear 201 meshes with the gear 211A. The gear 211B, which shares the same rotational shaft as the gear 211A, meshes with the gear 212A. The gear 212B, which shares the same rotational shaft as the gear 212A, meshes with the gears 213A and 214. The gear 214 meshes with the gear 215A. Each of the gear 213B, which shares the same rotational shaft as the gear 213A, and the gear 215B, which shares the same rotational shaft as the gear 215A, meshes with the gear 216. The gear 216 meshes with the gear 217 attached to the rotational shaft of the second holder 22.

The one-way clutch 231 is mounted on the rotational shaft of the gears 215A and 215B. The one-way clutch 231 transmits a rotational force only for clockwise rotation between the gears 215A and 215B. The torque limiter 232 is mounted on the rotational shaft of the gears 213A and 213B. The torque limiter 232 limits a rotational force transmitted between the gears 213A and 213B. The rotary encoder 233 is mounted on the rotational shaft of the gear 216. The rotary encoder 233 outputs a signal corresponding to the rotated amount of the gear 216. The torque limiter 232 is an example of the first torque limiter.

The gear 201 also meshes with the gear 221A. The gear 221B, which shares the same rotational shaft as the gear 221A, meshes with the gear 222. The gear 222 meshes with the gear 223A. The gear 223B, which shares the same rotational shaft as the gear 223A, meshes with the gear 224. The gear 224 meshes with the gear 225 attached to the rotational shaft of the second lamination roller 52. The torque limiter 234 is mounted on the rotational shaft of the gears 223A and 223B. The torque limiter 234 limits a rotational force transmitted between the gears 223A and 223B. The rotary encoder 233 is mounted on the rotational shaft of the gear 223B. The rotary encoder 233 outputs a signal corresponding to the rotated amount of the gear 223B. The rotary encoder 233 is an example of the detecting portion. The torque limiter 234 is an example of the second torque limiter.

The rotary encoders 233 and 235 are connected to the ASIC 95 (see Fig. 3). The control unit 90 obtains the rotated amount of the gear 216 based on the output signal from the rotary encoder 233, and obtains the rotated amount of the gear 223B based on the output signal from the rotary encoder 235.

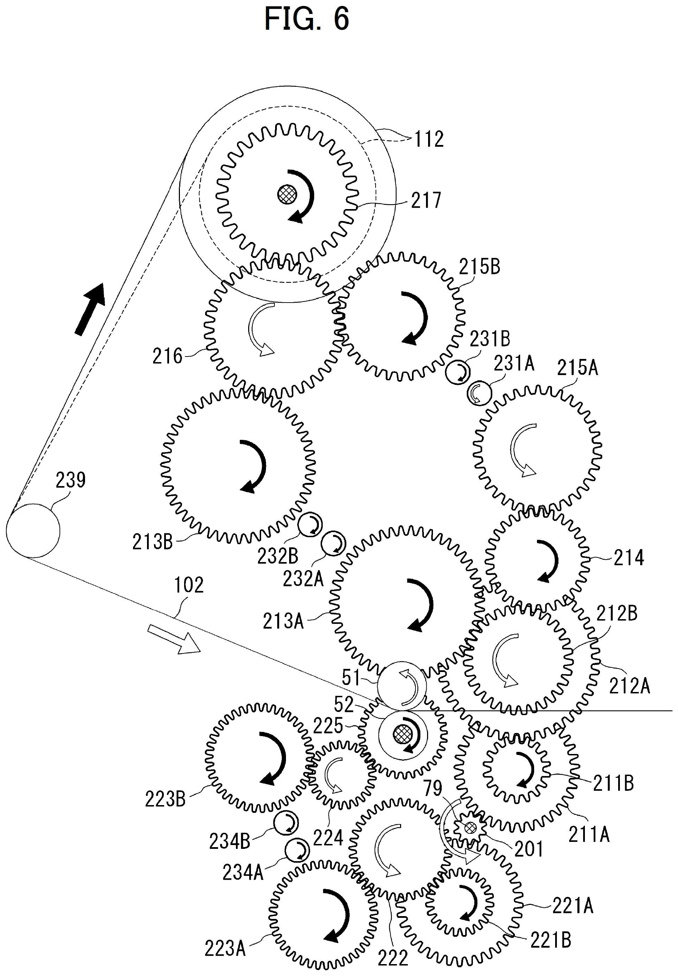

As illustrated in Figs. 5B and 6, when the control unit 90 causes the common motor 70 to rotate in a forward direction, the rotational shaft 79 and the gear 201 rotate in the counterclockwise direction. The rotational force for rotating the rotational shaft 79 in the counterclockwise direction is transmitted as a rotational force for rotating the gears 211A and 211B in the clockwise direction, rotating the gears 212A and 212B in the counterclockwise direction, rotating the gears 213A, 213B, and 214 in the clockwise direction, and rotating the gear 215 in the counterclockwise direction. The rotational force for rotating the gear 215A in the counterclockwise direction is not transmitted to the gear 215B due to the action of the one-way clutch 231. Accordingly, a rotational force for rotating the gear 216 in the counterclockwise direction is transmitted to the gear 216 from the gear 213B, and a rotational force in the clockwise direction is applied to the gear 217. The clockwise rotational force applied to the gear 217 is a rotational force in a direction for taking up the second member 102.

Furthermore, the rotational force for rotating the rotational shaft 79 in the counterclockwise direction is transmitted as a rotational force for rotating the gears 221A and 221B in the clockwise direction, rotating the gear 222 in the counterclockwise direction, rotating the gears 223A and 223B in the clockwise direction, rotating the gear 224 in the counterclockwise direction, and rotating the gear 225 in the clockwise direction. The clockwise rotational force applied to the gear 225 is a rotational force in a direction for drawing out the second member 102.

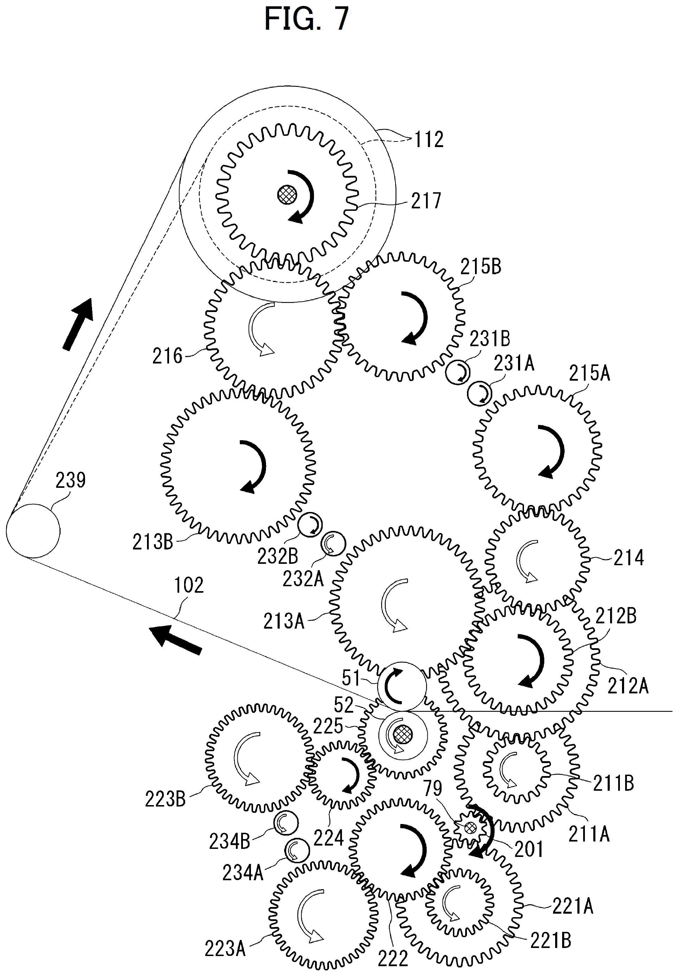

As illustrated in Figs. 5C and 7, when the control unit 90 causes the common motor 70 to rotate in a reverse direction, the rotational shaft 79 and the gear 201 rotate in the clockwise direction. The rotational force for rotating the rotational shaft 79 in the clockwise direction is transmitted as a rotational force for rotating the gears 211A and 211B in the counterclockwise direction, rotating the gears 212A and 212B in the counterclockwise direction, rotating the gears 213A and 214 in the counterclockwise direction, and rotating the gear 215A in the clockwise direction. A rotational force is transmitted to the gear 215B by the action of the one-way clutch 231 disposed between the gear 215A and the gear 215B. Accordingly, the gear 215B rotates in the clockwise direction. The rotational force for rotating the gear 215B in the clockwise direction is transmitted as a rotational force for rotating the gear 216 in the counterclockwise direction, and rotating the gears 213B and 217 in the clockwise direction. The clockwise rotational force applied to the gear 217 is a rotational force in a direction for taking up the second member 102. In addition, since the rotational force in the counterclockwise direction is transmitted to the gear 213A and the rotational force in the clockwise direction is transmitted to the gear 213B, slip occurs in the torque limiter 232.

Furthermore, the rotational force for rotating the rotational shaft 79 in the clockwise direction causes the gears 221A and 221B to rotate in the counterclockwise direction, the gear 222 to rotate in the clockwise direction, and the gear 223A to rotate in the counterclockwise direction. The rotational force of the gear 223A causes, via the torque limiter 234, the gear 223B to rotate in the counterclockwise direction, and is transmitted as a rotational force for rotating the gear 224 in the clockwise direction, and rotating the gear 225 in the counterclockwise direction. The counterclockwise rotational force applied to the gear 225 is a rotational force in a direction for taking up the second member 102.

As described above, the first transmission unit 71 transmits the counterclockwise rotational force of the rotational shaft 79 to the second roll 112 as a rotational force in a direction for taking up the second member 102, the rotational force being limited by the torque limiter 232. In addition, the first transmission unit 71 transmits the clockwise rotational force of the rotational shaft 79 to the second roll 112 as a rotational force in a direction for taking up the second member 102 without limiting the rotational force by the one-way clutch 231. The second transmission unit 72 transmits the counterclockwise rotational force of the rotational shaft 79 to the lamination rollers 50 as a rotational force in a direction for drawing out the second member 102, the rotational force being limited by the torque limiter 234, and transmits the clockwise rotational force of the rotational shaft to the lamination rollers 50 as a rotational force in a direction for taking up the second member 102, the rotational force being limited by the torque limiter 234.

The first transmission unit 71 includes a first transmission path 73 and a second transmission path 74 that transmit the rotational force of the rotational shaft 79 to the second roll 112. The first transmission path 73 extends from the gear 212B to the gear 216 via the gear 213A, the torque limiter 232, and the gear 213B. The second transmission path 74 extends from the gear 212B to the gear 216 via the gears 214 and 215A, the one-way clutch 231, and the gear 215B. The first transmission path 73 includes the torque limiter 232 on the path. The second transmission path 74 does not include a torque limiter on the path. When the rotational shaft 79 rotates in the counterclockwise direction, the rotational force limited by the torque limiter 232 is transmitted to the second roll 112 via the first transmission path 73. When the rotational shaft 79 rotates in the clockwise direction, the rotational force not limited by a torque limiter is transmitted to the second roll 112 via the second transmission path 74.

With reference to Figs. 6 and 7, details of the first transmission unit 71 and the second transmission unit 72 will be described. As illustrated in Figs. 6 and 7, the one-way clutch 231 includes a motor-side portion 231A that rotates together with the gear 215A, and a roll-side portion 231B that rotates together with the gear 215B. The torque limiter 232 includes a motor-side portion 232A that rotates together with the gear 213A, and a roll-side portion 232B that rotates together with the gear 213B. The torque limiter 234 includes a motor-side portion 234A that rotates together with the gear 223A, and a roller-side portion 234B that rotates together with the gear 223B.

Figs. 6 and 7 also illustrate the second roll 112, the first lamination roller 51, the second lamination roller 52, an intermediate roller 239, and the second member 102. The second member 102 is drawn out from the second roll 112 and enters between the first lamination roller 51 and the second lamination roller 52 via the intermediate roller 239.

Hereinafter, a state in which the second roll 112 and the lamination rollers 50 can rotate independently at free speeds is referred to as a "free state." For example, when the second member 102 is not connected between the second roll 112 and the lamination rollers 50, the second roll 112 and the lamination rollers 50 are in the free state. In the free state, a circumferential speed of the second roll 111 when the common motor 70 rotates in the forward direction is denoted by V1a, and a conveyance force of the second roll 112 at that time is denoted by F1a. In the free state, a circumferential speed of the second roll 112 when the common motor 70 rotates in the reverse direction is denoted by V1b, and a conveyance force of the second roll 112 at that time is denoted by F1b. In the free state, a circumferential speed of the lamination rollers 50 when the common motor 70 rotates in the forward direction or in the reverse direction is denoted by V2, and a conveyance force of the lamination rollers 50 at that time is denoted by F2.

The conveyance force F1a is a rotational force limited by the torque limiter 232. The conveyance force F1b is a rotational force not limited by a torque limiter. The conveyance force F2 is a rotational force limited by the torque limiter 234. In addition, the circumferential speed V2 and the conveyance force F2 are constant, whereas the circumferential speeds V1a and V1b and the conveyance forces F1a and F1b vary depending on an amount of the second member 101 wound into the second roll 111 (i.e., a remaining amount of the second member 102). Here, a rotational force and a rotational speed of the common motor 70 during rotation in the forward direction (forward rotation) are assumed to be the same as a rotational force and a rotational speed of the common motor 70 during rotation in the reverse direction (reverse rotation), but the rotational force and the rotational speed may be different between forward rotation and reverse rotation.

The first transmission unit 71 and the second transmission unit 72 are configured to satisfy the following conditions:
(Condition 1) V2 < Minimum Value of V1a
(Condition 2) F2 > Maximum Value of F1a
(Condition 3) V2 < Minimum Value of V1b
(Condition 4) F2 < Minimum Value of F1b

When the common motor 709 rotates in the forward direction, Conditions V2 < V1a and F2 > F1a are satisfied. Since the conveyance force of the lamination rollers 50 is greater than the conveyance force of the second roll 112, the second member 102 is conveyed in a direction for drawing out the second member 102 at a speed V2. At this time, while a rotational force in the clockwise direction is applied to the second roll 112 via the first transmission unit 71, and a rotational force in the counterclockwise direction is applied to the second roll 112 from the lamination rollers 50 via the second member 102, the second roll 112 actually rotates in the counterclockwise direction. Accordingly, the gear 216 actually rotates in the clockwise direction, and the gears 213B and 215B actually rotate in the counterclockwise direction.

At this time, in the torque limiter 232, the motor-side portion 232A rotates in the clockwise direction, and the roller-side portion 234B rotates in the counterclockwise direction. As a result, a rotational force in a direction for preventing rotation of the second roll 112 in a draw-out direction is generated, and the second member 102 is conveyed in the draw-out direction while maintaining tension due to the conveyance force F1a.

In the one-way clutch 231, both the motor side portion 231A and the roll-side portion 231B rotate in the counterclockwise direction. However, since the second member 102 is drawn out at a low speed, the motor-side portion 231A rotates faster than the roll-side portion 232A, and therefore the one-way clutch 231 does not transmit the rotational force.

When the common motor 70 rotates in the reverse direction, Conditions V2 < V1b and F2 < F1b are satisfied. Since the circumferential speed of the second roll 112 is greater than the circumferential speed of the lamination rollers 50, the second member 102 is conveyed in a take-up direction at a speed V1b. At this time, a counterclockwise rotational force is applied to the lamination rollers 50 via the second transmission unit 72, and a counterclockwise rotational force is applied to the lamination rollers 50 from the second roll 112 via the second member 102. Accordingly, the lamination rollers 50 rotate at a speed V1b that is greater than the speed V2 resulting from the rotational force transmitted via the second transmission unit 72.

At this time, in the torque limiter 234, the motor-side portion 234A rotates in the counterclockwise direction at a low speed, and the roller-side portion 234B rotates faster than the motor-side portion 234A in the counterclockwise direction. As a result, a rotational force in a direction for preventing rotation of the lamination rollers 50 in a take-up direction is generated, and the second member 102 is conveyed in the take-up direction while maintaining tension due to the conveyance force F2.

As described above, the laminating apparatus 1 is configured such that, when the rotational shaft 79 rotates in the counterclockwise direction, the second member 102 is conveyed in a direction for drawing out the second member 102 from the second roll 112, and when the rotational shaft 79 rotates in the clockwise direction, the second member 102 is conveyed in a direction for taking up the second member 102 onto the second roll 112. Specifically, the first transmission unit 71 and the second transmission unit 72 are configured such that the second member 102 is conveyed as described above.

Furthermore, the laminating apparatus 1 is configured such that, when the rotational shaft 79 rotates in the clockwise direction in a state where the amount of the second member 102 wound into the second roll 112 is minimum, a rotational force is applied to the second roll 112 and the lamination rollers 50 so that a circumferential speed of the second member 102 wound on the second roll 112 becomes greater than a circumferential speed of the lamination rollers 50. Specifically, the first transmission unit 71 and the second transmission unit 72 are configured to satisfy the above-described relationship between the magnitudes of speeds. However, this relationship between the magnitudes of speeds should be satisfied in a case where the second roll 112 and the lamination rollers 50 can rotate independently at free speeds (for example, under an assumption that the second member 102 is not connected between the second roll 112 and the lamination rollers 50).

### < Laminating Process by Control Unit 90 >

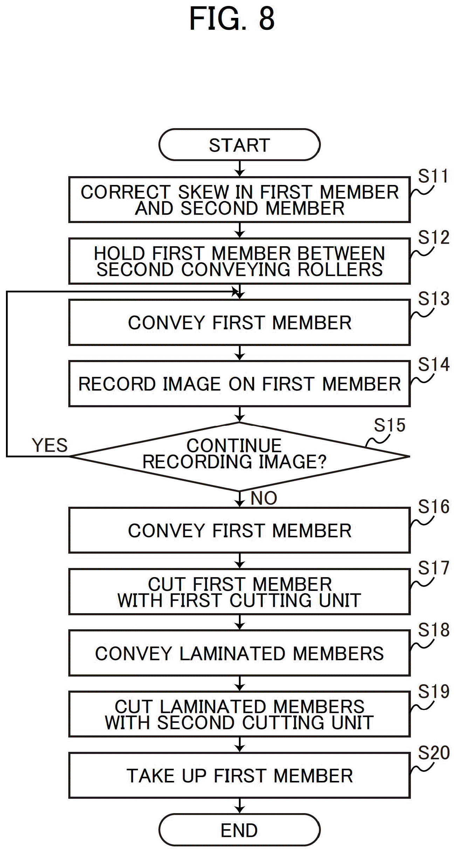

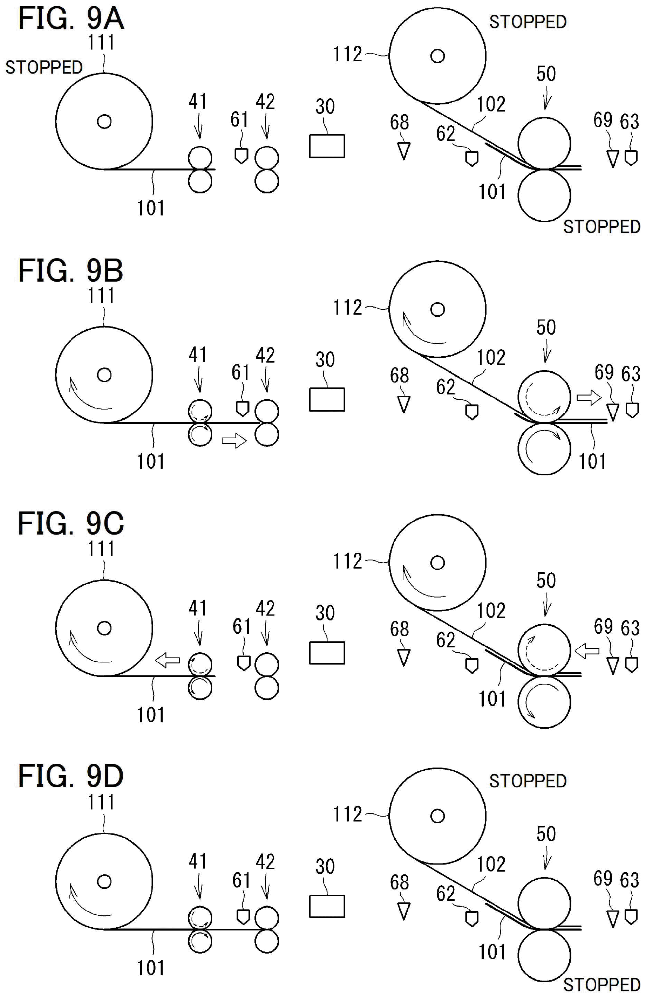

A laminating process performed by the control unit 90 will be described next with reference to Fig. 8. The laminating process illustrated in Fig. 8 is executed when the control unit 90 executes a program stored in the RAM 93. When receiving an instruction to execute a laminating process from the operation unit 12, for example, the control unit 90 executes the laminating process. As the control unit 90 executes the laminating process, the laminating apparatus 1 operates as illustrated in Figs. 9 through 11. Note that only main components of the laminating apparatus 1 are illustrated in Figs. 9 through 11. Furthermore, descriptions related to the third conveying rollers 43 and the fourth conveying rollers 44 have been omitted below since the third conveying rollers 43 and the fourth conveying rollers 44 play only a minor role in the laminating process.

Fig. 9A illustrates an initial state before execution of the laminating process. In the initial state, the control unit 90 stops the first roll 111, the second roll 112, and the lamination rollers 50. In the initial state, the leading edge of the first member 101 drawn out from the first roll 111 is held between the first conveying rollers 41 while the leading edge of the second member 102 is held between the lamination rollers 50. Additionally, the remaining portion of the first member 101 generated in the previous laminating process remains held between the lamination rollers 50.

When starting to use the laminating apparatus 1, the user mounts the first roll 111 on the first holder 21 and mounts the second roll 112 on the second holder 22. The user then draws out the first member 101 from the first roll 111 and causes the leading edge of the drawn-out portion of the first member 101 to be held between the first conveying rollers 41. The user also draws out the second member 102 from the second roll 112 and causes the leading edge of the drawn-out portion of the second member 102 to be held between the lamination rollers 50. Through these operations, the laminating apparatus 1 is placed in the initial state illustrated in Fig. 9A.

### < Skew Correction for First Member 101 and Second Member 102 >

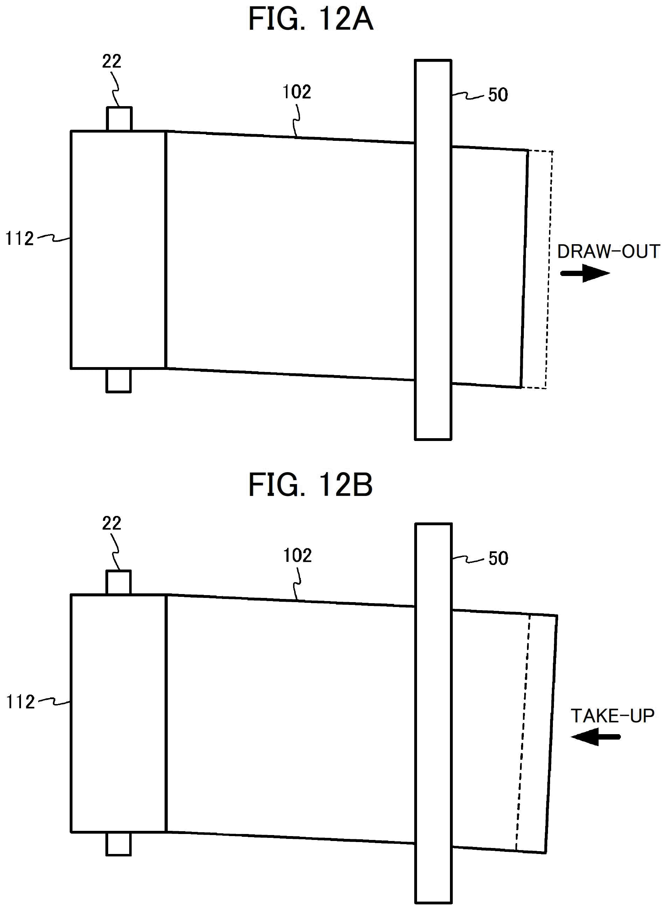

At the beginning of the laminating process, the control unit 90 corrects any skew in the first member 101 and the second member 102 (S11). In S11 the control unit 90 drives the conveying motor 82 to apply a force to the first conveying rollers 41 acting in a direction for drawing out the first member 101 (see Figs. 9B and 12A). At this time, the first roll motor 81 applies a force to the first roll 111 acting in a direction for taking up the first member 101. However, since the latter force is smaller than the former force, the first member 101 is drawn out toward the downstream side of the conveying path 15 (hereinafter, this operation will be referred to as a "draw-out operation").

Following the draw-out operation, the control unit 90 drives the conveying motor 82 in a reverse direction to apply a force to the first conveying rollers 41 acting in the direction for taking up the first member 101 (see Figs. 9C and 12B). At this time as well, the first roll motor 81 applies a force to the first roll 111 acting in the direction for taking up the first member 101. Accordingly, the first member 101 is taken up onto the first roll 111 (hereinafter, this operation will be referred to as a "take-up operation").

During the draw-out operation, the control unit 90 draws out, based on an output signal from the member sensor 61, the first member 101 until the leading edge of the first member 101 reaches the position of the member sensor 61. During the take-up operation, the control unit 90 takes up, based on an output signal from the rotary encoder (not illustrated) mounted on a rotational shaft of the first conveying roller 41, the first member 101 by a predetermined amount. The control unit 90 executes, as a skew correction control for the first member 101, the draw-out operation for the first member 101 and the take-up operation for the first member 101 at least once each.

In addition to the skew correction control for the first member 101, in S11 the control unit 90 causes the common motor 70 to rotate in the forward direction to apply a force to the lamination rollers 50 acting in a direction for drawing out the second member 102 (see Fig. 9B). At this time, the common motor 70 applies a force to the second roll 112 acting in a direction for taking up the second member 102. However, since the latter force is smaller than the former force, the second member 102 is drawn out toward the lamination rollers 50.

Following the draw-out operation for the second member 102, the control unit 90 causes the common motor 70 to rotate in the reverse direction to apply a force to the lamination rollers 50 acting in the direction for taking up the second member 102 (see Fig. 9C). At this time as well, the common motor 70 applies a force to the second roll 112 acting in the direction for taking up the second member 102. Accordingly, the second member 102 is taken up onto the second roll 112.

During the draw-out operation for the second member 102, the control unit 90 draws out, based on an output signal from the member sensor 63, the second member 102 until the leading edge of the second member 102 reaches the position of the member sensor 63. During the take-up operation, the control unit 90 takes up, based on an output signal from a rotary encoder 233 included in the second transmission unit 72, the second member 102 by a predetermined amount. The control unit 90 executes, as a skew correction control for the second member 102, the draw-out operation for the second member 102 and the take-up operation for the second member 102 at least once each.

When the user causes the leading edge of the drawn-out portion of the second member 102 that has been drawn out from the second roll 112 to be held between the lamination rollers 50, the second member 102 may be held between the lamination rollers 50 in an oblique direction, as illustrated in Fig. 12A. In this case, skew in the second member 102 can be corrected by alternately executing the draw-out operation (Fig. 12A) and the take-up operation (Fig. 12B) for the second member 102. Skew in the first member 101 can also be corrected according to the same method.

In S11 the control unit 90 performs the skew correction for the first member 101 and the skew correction for the second member 102 in parallel. However, the control unit 90 may execute the skew correction for one of the first member 101 and the second member 102 first before executing the skew correction for the other.

### < Holding First Member 101 between Second Conveying Rollers 42 >

Next, the control unit 90 causes the first member 101 to be held between the second conveying rollers 42 (S12). In S12 the control unit 90 stops driving the common motor 70 to halt the lamination rollers 50 and the second roll 112. Subsequently, the control unit 90 drives the conveying motor 82 to apply a force to the first conveying rollers 41 acting in the direction for drawing out the first member 101. At this time as well, the first roll motor 81 applies a force to the first roll 111 acting in the direction for taking up the first member 101. Since the latter force is smaller than the former force, the first member 101 is drawn out toward the downstream side of the conveying path 15 while maintaining a certain tension. When the leading edge of the first member 101 reaches the second conveying rollers 42, the second conveying rollers 42 hold the first member 101 therebetween (see Fig. 9D).

### < Conveyance of and Image Recording on First Member 101 >

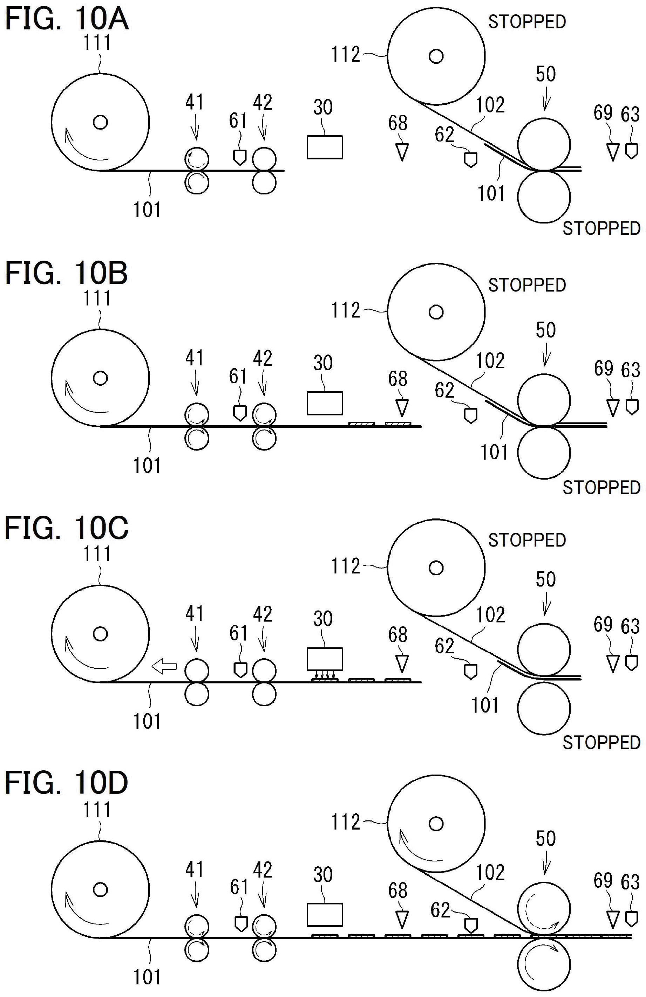

Next, the control unit 90 causes the first member 101 to be conveyed (S13). In S13 the control unit 90 drives the conveying motor 82 to rotate the first conveying rollers 41 and the second conveying rollers 42, thereby causing the first conveying rollers 41 and the second conveying rollers 42 to convey the first member 101 (see Fig. 10B).

Next, the control unit 90 halts conveyance of the first member 101 and drives the image recording unit 30 to record an image on the first member 101 (S14). In S14 the control unit 90 stops driving the conveying motor 82 to halt rotation of the first conveying rollers 41 and the second conveying rollers 42, thereby stopping the first member 101. While the first member 101 is stopped, the image recording unit 30 ejects ink from the recording head 32 onto the recording surface 107 of the first member 101, thereby recording an image on a portion of the recording surface 107 of the first member 101 (see Fig. 10C).

Next, the control unit 90 determines whether to continue recording images (S15). When the control unit 90 determines to continue recording images (S15: YES), the process advances to S13. The control unit 90 repeatedly executes S13 and S14 until reaching a NO determination in S15. In this way, images are sequentially recorded on the first member 101 from the downstream side to the upstream side of the conveying direction. Each shaded area on the first member 101 in Fig. 10B and other drawings denotes an area where the image recording unit 30 has recorded an image in a single recording operation.

### < Driving Lamination Rollers 50 >

After executing S13, when the control unit 90 determines, based on an output signal from the member sensor 62, that the first member 101 has reached the lamination rollers 50, the control unit 90 starts driving the lamination rollers 50. Thereafter, the control unit 90 drives the common motor 70 to apply a force to the lamination rollers 50 acting in the direction for drawing out the second member 102. At this time, the common motor 70 applies a force to the second roll 112 acting in the direction for taking up the second member 102 (see Fig. 10D). Thereafter, the lamination rollers 50 bond the recording surface 107 of the first member 101 to the lamination surface 109 of the second member 102.

### < Cutting with First Cutting Unit 68 >

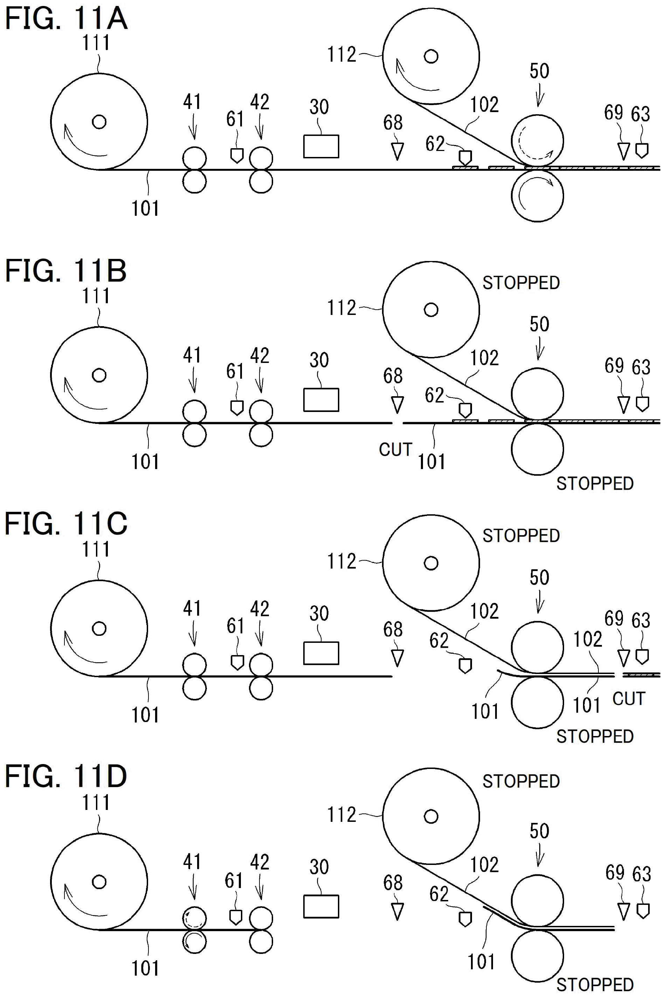

When the control unit 90 determines in S15 not to continue image recording (S15: NO), the process advances to S16. In this case, the control unit 90 conveys the first member 101 until a cutting position of the first member 101 has reached beneath the first cutting unit 68 (S16). The cutting position is positioned upstream relative to the position at which the image has been recorded on the first member 101. In S16 the control unit 90 performs the same process as in S13. However, while the lamination rollers 50 are rotating, the first member 101 is conveyed by both the force from the second conveying rollers 42 and the force from the lamination rollers 50 (see Fig. 11A).

Next, the control unit 90 causes the first member 101 to be cut by the first cutting unit 68 (S17). In S17 the control unit 90 drives the cutting motor 84 to operate the first cutting unit 68. The first cutting unit 68 cuts the first member 101 at the cutting position (see Fig. 11B).

### < Cutting with Second Cutting Unit 69 >

Next, the control unit 90 causes the first member 101 and the second member 102 to be conveyed after the first member 101 and the second member 102 have been laminated (S18). In S18 the control unit 90 drives the common motor 70 to convey the laminated first member 101 and second member 102 until the cutting position of the laminated first member 101 and second member 102 reaches a position beneath the second cutting unit 69.

After executing S18, the control unit 90 halts the first conveying rollers 41, the second conveying rollers 42, the lamination rollers 50, and the second roll 112. At this time point, the cutting position of the laminated first member 101 and second member 102 is positioned beneath the second cutting unit 69.

Next, the control unit 90 causes the laminated first member 101 and second member 102 to be cut by the second cutting unit 69 (S19). In S19 the control unit 90 drives the cutting motor 84 to operate the second cutting unit 69. The second cutting unit 69 cuts the laminated first member 101 and second member 102 at the cutting position (see Fig. 11C).

### < Taking Up First Member 101 >

Next, the control unit 90 causes the first member 101 to be taken up (rewound) onto the first roll 111 (S20). In S20 the control unit 90 drives the conveying motor 82 in the reverse direction to rotate the first conveying rollers 41 and the second conveying rollers 42 in the reverse direction. The first conveying rollers 41 and the second conveying rollers 42 apply a force to the first member 101 acting in the direction for taking up the first member 101. At this time as well, the first conveying motor 81 applies a force to the first roll 111 acting in the direction for taking up the first member 101. Therefore, the first member 101 is conveyed toward the first roll 111 and taken up onto the first roll 111 (see Fig. 11D).

### < Advantageous Effects of Embodiment >

As described above, the laminating apparatus 1 according to the present embodiment includes the first holder 21 (first supporting portion), the second holder 22 (second supporting portion), the image recording unit 30, the lamination rollers 50, and the common motor 70 (drive source). The common motor 70 is a single motor that rotates both the second roll 112 and the lamination rollers 50. Therefore, with the laminating apparatus 1 according to the present embodiment, the second roll 112 and the lamination rollers 50 can be operated by the single common motor 70, thereby reducing the cost of the laminating apparatus 1.

The second member 102 is conveyed in a direction for drawing out the second member 102 from the second roll 112 when the rotational shaft 79 (rotating portion) of the common motor 70 rotates in the counterclockwise direction (first direction), and is conveyed in a direction for taking up the second member 102 onto the second roll 112 when the rotational shaft 79 rotates in the clockwise direction (second direction). Accordingly, skew in the second member 102 can be corrected by rotating the rotational shaft 79 in the clockwise direction and in the counterclockwise direction to perform a draw-out operation for drawing out the second member 102 from the second roll 112 and a take-up operation for taking up the second member 102 onto the second roll 112. Therefore, after the second member 102 is brought into a non-skewed state, the second member 102 is laminated with the first member 101 on which an image is recorded, whereby a finished laminated product 100 with reduced misalignment can be obtained.

The laminating apparatus 1 further includes the first transmission unit 71 and the second transmission unit 72. The first transmission unit 71 transmits both counterclockwise and clockwise rotational forces of the rotational shaft 79 to the second roll 112 as a rotational force in a direction for taking up the second member 102. The second transmission unit 72 transmits a counterclockwise rotational force of the rotational shaft 79 to the lamination rollers 50 as a rotational force in a direction for drawing out the second member 102, and transmits a clockwise rotational force of the rotational shaft 79 to the lamination rollers 50 as a rotational force in a direction for taking up the second member 102. Accordingly, when the rotational shaft 79 rotates in the counterclockwise direction, rotational forces in opposite directions are applied to the second roll 112 and the lamination rollers 50 to apply a tension to the second member 102, and when the rotational shaft 79 rotates in the clockwise direction, rotational forces in the same direction are applied to the second roll 112 and the lamination rollers 50 to take up the second member 102.

The first transmission unit 71 includes the first transmission path 73 and the second transmission path 74. The first transmission path 73 includes the torque limiter 232 along the path, and the second transmission path 74 does not include a torque limiter along the path. When the rotational shaft 79 rotates in the counterclockwise direction, the rotational force limited by the torque limiter 232 is transmitted to the second roll 112 via the first transmission path 73. When the rotational shaft 79 rotates in the clockwise direction, the rotational force not limited by a torque limiter is transmitted to the second roll 112 via the second transmission path 74. Accordingly, the first transmission unit 71 can apply the counterclockwise rotational force of the rotational shaft 79 to the second roll 112, the counterclockwise rotational force being limited by the torque limiter 232, and can apply the clockwise rotational force of the rotational shaft 79 to the second roll 112, the clockwise rotational force being not limited by a torque limiter.

The rotary encoder 233 (detecting portion) is mounted on the rotational shaft of the gear 216. The rotary encoder 233 may be disposed at least one of: downstream relative to the torque limiter 232 along the first transmission path 73; and downstream relative to the one-way clutch 231 along the second transmission path 74. With this configuration, the rotary encoder 233 can detect the rotated amount of a member within the first transmission unit 71.

The torque limiter 234 is mounted on the rotational shaft of the gears 223A and 223B. The torque limiter 234 may be disposed at any position within the second transmission unit 72. Accordingly, a rotational force limited by the torque limiter 234 can be applied to the lamination rollers 50. Furthermore, the first transmission unit 71 and the second transmission unit 72 include gears. Therefore, a rotational force of the rotational shaft 79 can be transmitted to the second roll 112 and the lamination rollers 50 through the gears.

When the rotational shaft 79 rotates in the clockwise direction in a state where the amount of the second member 102 wound into the second roll 112 is at a minimum, a rotational force is applied to the second roll 112 and the lamination rollers 50 such that the circumferential speed of the second member 102 wound on the second roll 112 becomes greater than the circumferential speed of the lamination rollers 50. Accordingly, when the rotational shaft 79 rotates in the counterclockwise direction, the second member 102 can be taken up while a tension is applied to the second member 102.

The first transmission unit 71 includes the torque limiter 232 (first torque limiter), transmits a counterclockwise rotational force of the rotational shaft 79 to the second roll 112 via the torque limiter 232, and transmits a clockwise rotational force of the rotational shaft 79 to the second roll 112 without passing through the torque limiter 232. The second transmission unit 72 includes the torque limier 234 (second torque limiter) and transmits counterclockwise and clockwise rotational forces of the rotational shaft 79 to the lamination rollers 50 via the torque limiter 234. Accordingly, the counterclockwise rotational force of the rotational shaft 79 can be applied to the second roll 112 while being limited by the torque limiter 232 and can also be applied to the lamination rollers 50 while being limited by the torque limiter 234. In addition, the clockwise rotational force of the rotational shaft 79 can be applied to the second roll 112 without being limited by the torque limiter 232 and can be applied to the lamination rollers 50 while being limited by the torque limiter 234.

The control unit 90 of the laminating apparatus 1 performs, as a skew correction control for the second member 102, the draw-out operation and the take-up operation at least once each. Accordingly, skew in the second member 102 can be corrected. Therefore, after the second member 102 is brought into a non-skewed state, the second member 102 is laminated with the first member 101 on which an image is recorded, whereby a finished laminated product 100 without distortion can be obtained.

The laminating apparatus 1 includes a member sensor 63 disposed frontward relative to the lamination rollers 50 in the front-rear direction 8 (downstream relative to the lamination rollers 50). The control unit 90 switches, based on an output signal from the member sensor 63, between execution of the draw-out operation and execution of the take-up operation. Accordingly, the draw-out operation and the take-up operation can be switched in response to the member sensor 63 detecting the second member 102.

### < Variations >

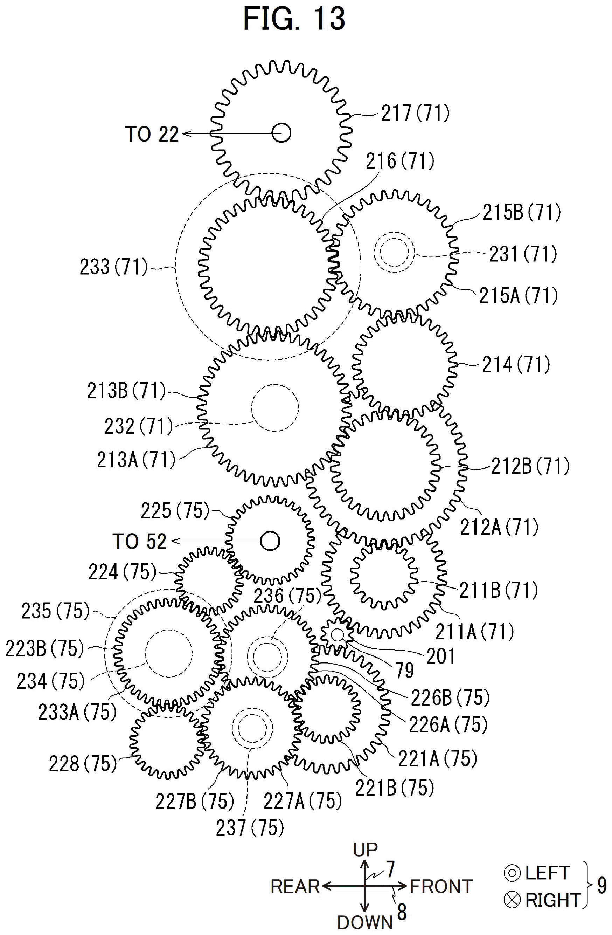

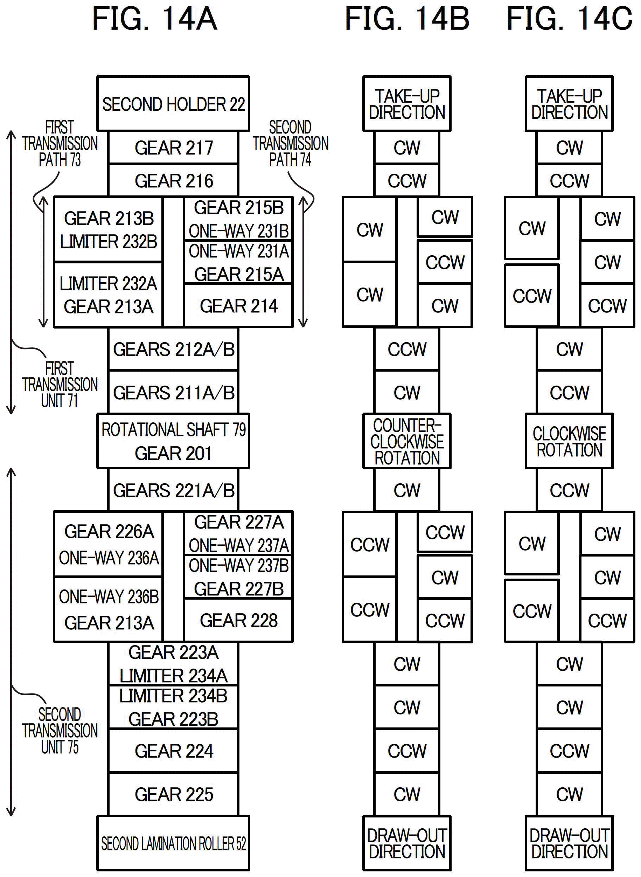

Various variations can be applied to the laminating apparatus 1 according to the above embodiment. A second transmission unit 75 illustrated in Figs. 13 and 14A includes gears 226A and 226B instead of the gear 222, and includes gears 227A, 227B, and 228 and one-way clutches 236 and 237. In the second transmission unit 75, the gear 221B meshes with the gears 226A and 227A. The gear 227B, which shares the same rotational shaft as the gear 227A, meshes with the gear 228. The gear 226B, which shares the same rotational shaft as the gear 226A, and the gear 228 mesh with the gear 223A.

The one-way clutch 236 is mounted on the rotational shaft of the gears 226A and 226B. The one-way clutch 236 transmits a rotational force only for counterclockwise rotation between the gears 226A and 226B. The one-way clutch 237 is mounted on the rotational shaft of the gears 227A and 227B. The one-way clutch 237 transmits a rotational force only for clockwise rotation between the gears 227A and 227B.

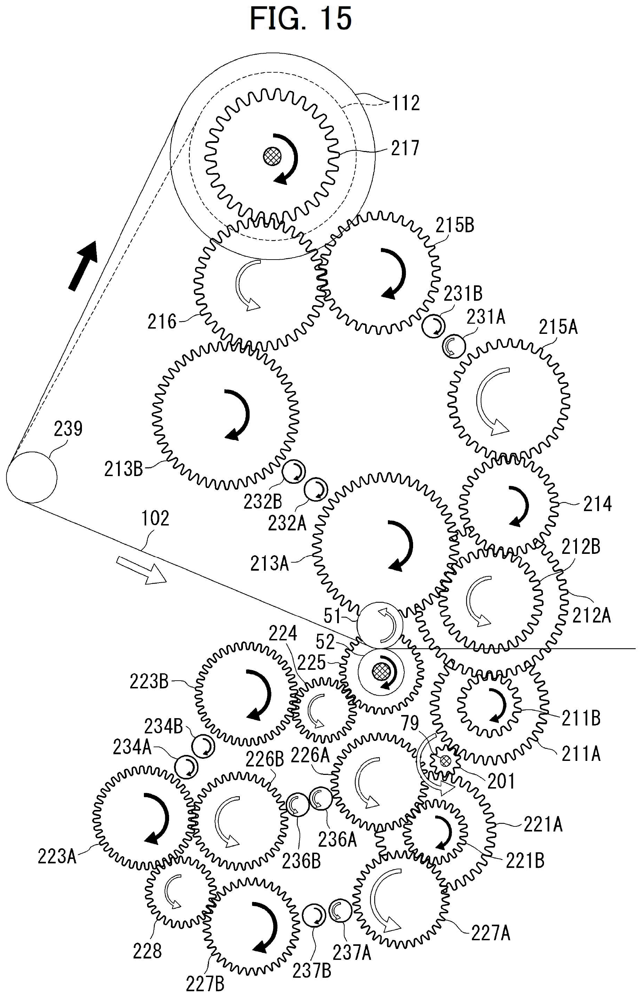

As illustrated in Figs. 14B and 15, when the control unit 90 causes the common motor 70 to rotate in the forward direction, the rotational shaft 79 and the gear 201 rotate in the counterclockwise direction. A rotational force for rotating the rotational shaft 79 n the counterclockwise direction is transmitted as a rotational force for rotating the gears 221A and 221B in the clockwise direction and rotating the gears 226A, 226B, and 227A in the counterclockwise direction. The rotational force for rotating the gear 227A in the counterclockwise direction is not transmitted to the gear 227B due to the action of the one-way clutch 237. Accordingly, a rotational force for rotating the gear 223A in the clockwise direction is transmitted from the gear 226B to the gear 223A. This rotational force is transmitted as a rotational force for rotating the gear 223B in the clockwise direction and rotating the gear 224 in the counterclockwise direction, and a rotational force for clockwise rotation (clockwise rotational force) is applied to the gear 225. The clockwise rotational force applied to the gear 225 is a rotational force in a direction for drawing out the second member 102.

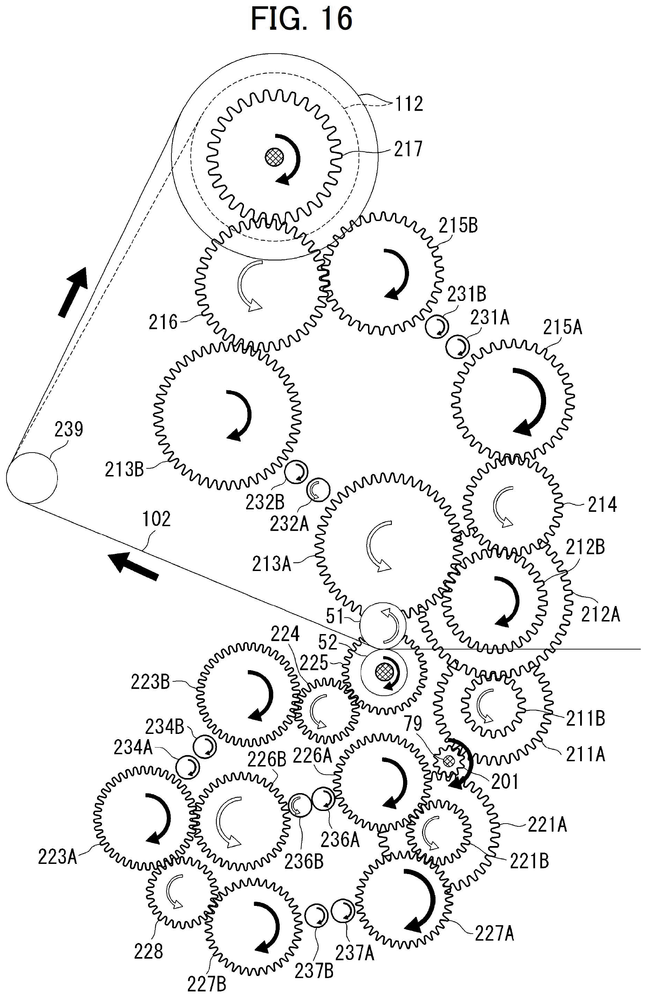

As illustrated in Figs. 14C and 16, when the control unit 90 causes the common motor 70 to rotate in the reverse direction, the rotational shaft 79 and the gear 201 rotate in the clockwise direction. A rotational force for rotating the rotational shaft 79 in the clockwise direction is transmitted as a rotational force for rotating the gears 221A and 221B in the counterclockwise direction, rotating the gears 226A, 227A, and 227B in the clockwise direction, and rotating the gear 228 ion the counterclockwise direction. The rotational force for rotating the gear 226A in the clockwise direction is not transmitted to the gear 226B due to the action of the one-way clutch 236. Accordingly, a rotational force for rotating the gear 223A in the clockwise direction is transmitted from the gear 228 to the gear 223A. This rotational force is transmitted as a rotational force for rotating the gear 223B in the clockwise direction and rotating the gear 224 in the counter clockwise direction, and a rotational force for clockwise rotation (clockwise rotational force) is applied to the gear 225.

A laminating apparatus according to a variation is configured such that, when the rotational shaft 79 rotates in the counterclockwise direction, the second member 102 is conveyed in a direction for drawing out the second member 102 from the second roll 112, and when the rotational shaft 79 rotates in the clockwise direction, the second member 102 is conveyed in a direction for taking up the second member 102 onto the second roll 112. Specifically, the first transmission unit 71 and the second transmission unit 75 are configured such that the second member 102 is conveyed as described above.

As described above, the second transmission unit 75 transmits both the counterclockwise and clockwise rotational forces of the rotational shaft 79 to the lamination rollers 50 as a rotational force in a direction for drawing out the second member 102. Accordingly, when the rotational shaft 79 rotates in the clockwise direction, rotational forces in opposite directions can be applied to the second roll 112 and the lamination rollers 50 to apply a tension to the second member 102.

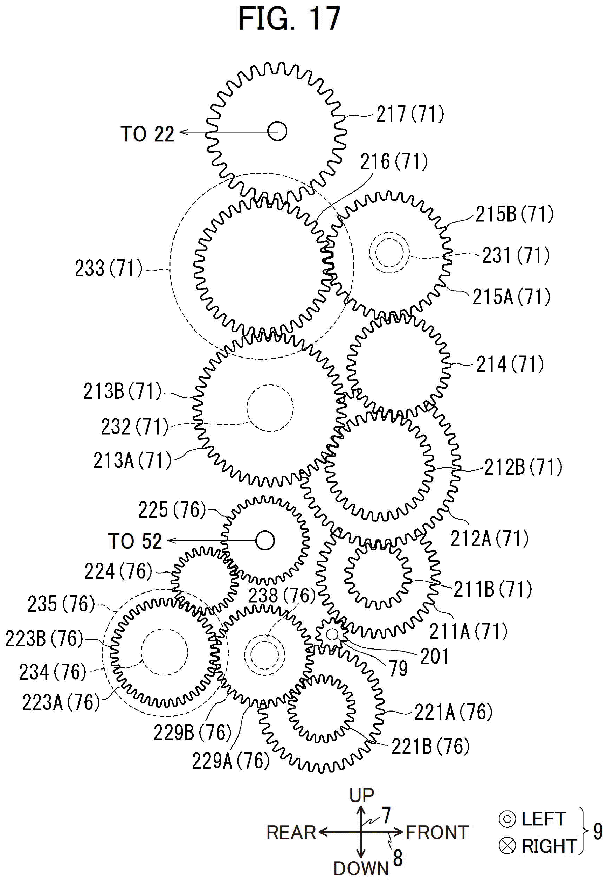

A second transmission unit 76 illustrated in Fig. 17 includes gears 229A and 229B instead of the gear 222, and includes a one-way clutch 238. The one-way clutch 238 is mounted on the rotational shaft of the gears 229A and 229B. The one-way clutch 238 transmits a rotational force only for counterclockwise rotation between the gears 229A and 229B. The one-way clutch 238 is an example of the transmission control unit that, when the rotational shaft 79 rotates in the clockwise direction, does not cause a rotational force to be transmitted from the rotational shaft 79 to the lamination rollers 50.

According to the first transmission unit 71 and the second transmission unit 76 illustrated in Fig. 17, when the rotational shaft 79 rotates in the counterclockwise direction, the second member 102 can be taken up by applying, to the second roll 112, a rotational force in a direction for taking up the second member 102 and by not transmitting, to the lamination rollers 50, a rotational force. Note that the second transmission unit may include, as the transmission control unit, a mechanism that blocks transmission of a rotational force, such as a planetary gear, instead of the one-way clutch 238.

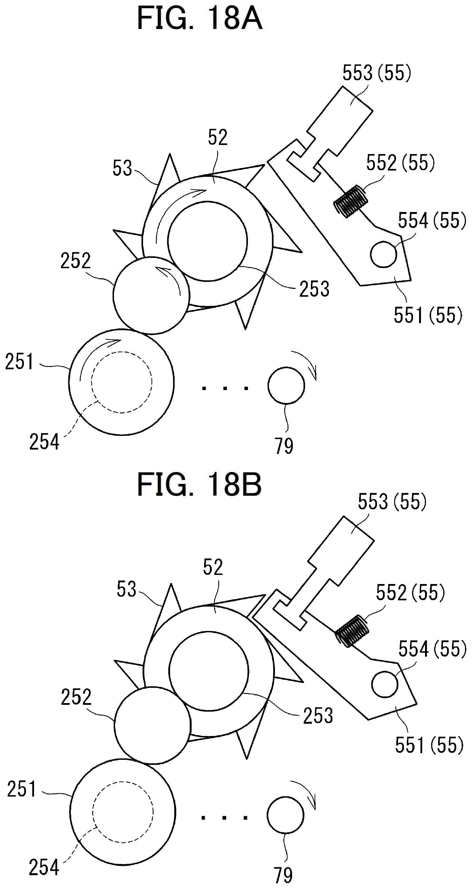

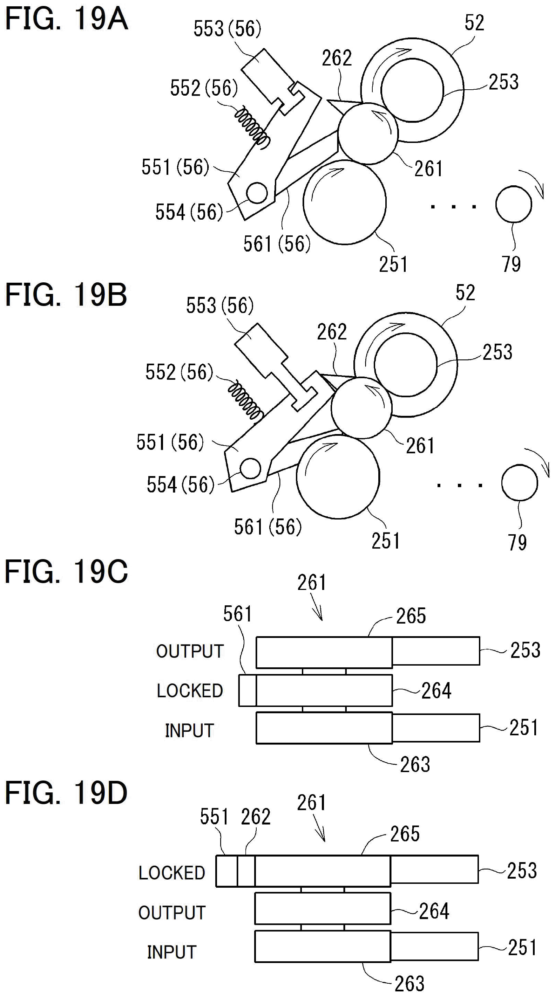

A second transmission unit of a laminating apparatus according to a variation may include a locking portion 55 illustrated in Figs. 18A and 18B. In Figs. 18A and 18B, a rotational force for rotating the rotational shaft 79 of the common motor 70 is transmitted to the second lamination roller 52 via a transmission path including gears 251, 252, and 253. The gear 251 meshes with the gear 252. The gear 252 also meshes with the gear 253, which shares the same rotational shaft as the second lamination roller 52. A torque limiter 254 is mounted on a rotational shaft of the gear 251. A plurality of protrusions 53 are disposed on the outer circumferential surface of the second lamination roller 52. The locking portion 55 includes a main body portion 551, a spring 552, and a solenoid 553, and is rotatable about a shaft 554. The locking portion 55 is urged by the spring 552 in a direction away from the second lamination roller 52. Note that gear teeth are omitted in Figs. 18 and 19.

In an unlocked state illustrated in Fig. 18A, the solenoid 553 is in a contracted state, and the main body portion 551 of the locking portion 55 is urged by the spring 552 and is positioned at a position at which the main body portion 551 does not engage with the protrusions 53 of the second lamination roller 52. In the unlocked state, when the common motor 70 rotates in the reverse direction and the rotational shaft 79 rotates in the clockwise direction, the gear 251 rotates in the clockwise direction, the gear 252 rotates in the counterclockwise direction, and the gear 253 and the second lamination roller 52 rotate in the clockwise direction.

In a locked state illustrated in Fig. 18B, on the other hand, the solenoid 553 is in an extended state, and the main body portion 551 of the locking portion 55 moves toward the second lamination roller 52 against a force of the spring 552. At this time, the main body portion 551 engages with the protrusions 53 on the second lamination roller 52, thereby preventing (locking) rotation of the second lamination roller 52. In the locked state, when the common motor 70 rotates in the reverse direction and the rotational shaft 79 rotates in the clockwise direction, slip occurs in the torque limiter 254, and the second lamination roller 52 does not rotate. In this manner, the locking portion 56 locks rotation of the lamination rollers 50 when the rotational shaft 79 rotates in the clockwise direction.

A second transmission unit of a laminating apparatus according to a variation may include a locking portion 56 illustrated in Figs. 19A and 19B. In Figs. 19A and 19B, a rotational force for rotating the rotational shaft 79 of the common motor 70 is transmitted to the second lamination roller 52 via a transmission path including the gear 251, a planetary differential gear 261, and the gear 253. The locking portion 56 includes, in addition to the main body portion 551, the spring 552, and the solenoid 553, a hook 561. As illustrated in Figs. 19C and 19D, the planetary differential gear 261 includes a sun gear 263, a planetary gear 264, and an internal gear 265. A hook 262 is disposed on an outer circumferential surface of the internal gear 265.

In an unlocked state illustrated in Fig. 19A, the solenoid 553 is in a contracted state, and the main body portion 551 of the locking portion 56 is urged by the spring 552 and is positioned at a position at which the hook 561 engages with the planetary gear 264. In the unlocked state, when the common motor 70 rotates in the reverse direction and the rotational shaft 79 rotates in the clockwise direction, the gear 251 rotates in the clockwise direction, the gear 252 rotates in the counterclockwise direction, and the gear 253 and the second lamination roller 52 rotate in the clockwise direction.

In a locked state illustrated in Fig. 19B, on the other hand, the solenoid 553 is in an extended state, and the main body portion 551 of the locking portion 55 moves toward the planetary differential gear 261 against a force of the spring 552. At this time, the main body portion 661 engages with the hook 262 on the internal gear 265, thereby preventing (locking) rotation of the internal gear 265, such that the planetary gear 264 rotates idly. In the locked state, when the common motor 70 rotates in the reverse direction and the rotational shaft 79 rotates in the clockwise direction, the planetary gear 264 rotates idly and the second lamination roller 52 does not rotate. In this manner, the locking portion 56 locks rotation of the lamination rollers 50 when the rotational shaft 79 rotates in the clockwise direction.

The second transmission unit illustrated in Fig. 18 and the second transmission unit illustrated in Fig. 19 respectively include the locking portion 55 and the locking portion 56 that lock rotation of the lamination rollers 50 when the rotational shaft 79 rotates in the clockwise direction. Accordingly, when the rotational shaft 79 rotates in the clockwise direction, the second member 102 can be taken up by applying, to the second roll 112, a rotational force in a direction for taking up the second member 102 and by locking rotation of the lamination rollers 50.

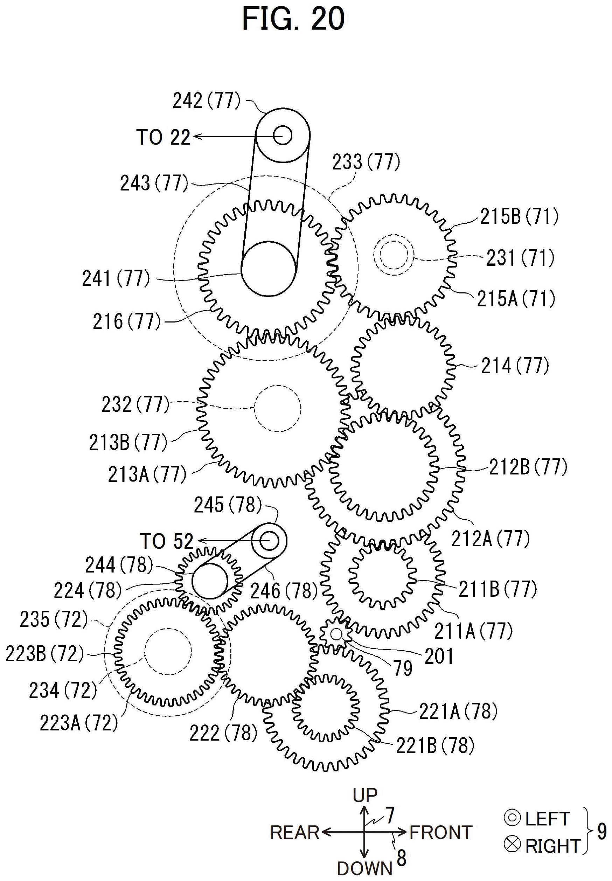

A first transmission unit and a second transmission unit of a laminating apparatus according to a variation may include belts for transmitting a rotational force. A first transmission unit 77 illustrated in Fig. 20 includes, instead of the gear 217, pulleys 241 and 242 and a belt 243. The pulley 241 shares the same rotational shaft as the gear 216. The pully 242 shares the same rotational shaft as the second holder 22. The belt 243 is looped around the pulleys 241 and 242.

A second transmission unit 78 illustrated in Fig. 20 includes, instead of the gear 225, pulleys 244 and 245 and a belt 246. The pulley 244 shares the same rotational shaft as the gear 224. The pulley 244 shares the same rotational shaft as the second lamination roller 52. The belt 246 is looped around the pulleys 244 and 245. With the first transmission unit 77 and the second transmission unit 78 as well, a rotational force of the rotational shaft 79 can be transmitted to the second roll 112 and the lamination rollers 50 via the belts 243 and 246.

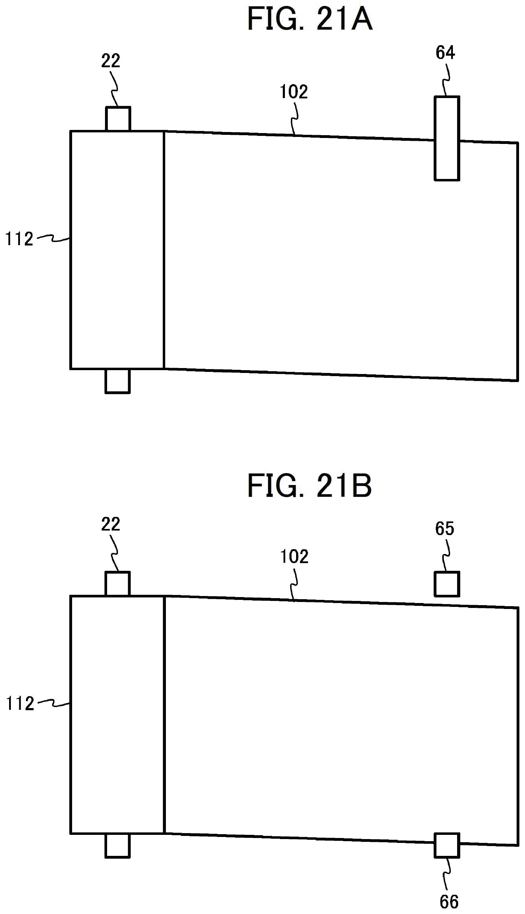

A laminating apparatus according to a variation may include a width-direction sensor for detecting a position in a width direction of the second member 102. In Fig. 21A, a width-direction sensor 64 is disposed on one side in the width direction of the second member 102 drawn out from the second roll 112. The width-direction sensor 64 outputs a plurality of signals indicating whether the second member 102 is present within a predetermined region. In Fig. 21B, width-direction sensors 65 and 66 are disposed on one side and the other side in the width direction of the second member 102, respectively. The width-direction sensors 65 and 66 each output one signal indicating whether the second member 102 is present at a predetermined position.

The control unit 90 detects a skewed state of the second member 102 based on the width-direction sensor 64 (or output signals from the width-direction sensors 65 and 66), and controls execution of the draw-out operation and the take-up operation based on the detected skewed state. For example, the control unit 90 repeatedly executes the draw-out operation and the take-up operation until determining that the second member 102 is not skewed. Accordingly, with the laminating apparatus according to the variation, skew in the second member 102 can be suitably corrected in accordance with the detected skewed state of the second member 102. Specifically, when the skew in the second member 102 is small, the skew correction control can be completed in a short time, and even when the skew in the second member 102 is large, the skew in the second member 102 can be reliably corrected.

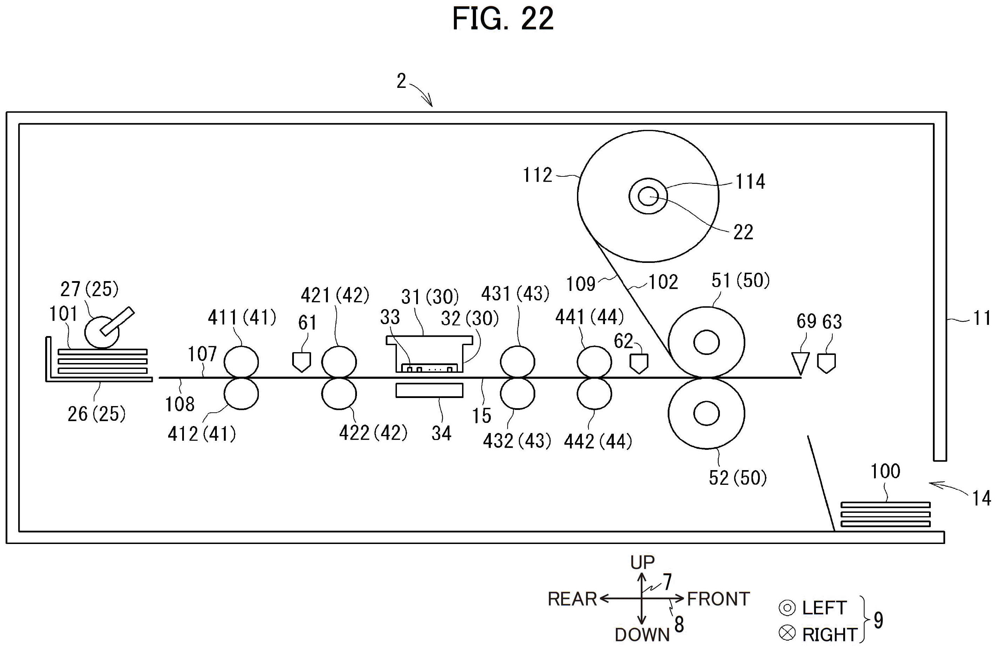

A laminating apparatus according to a variation may laminate the first member 101, which has a predetermined length and on which an image has been recorded, with a second member 102, which has been drawn out from the second roll 112. A laminating apparatus 2 according to the variation illustrated in Fig. 22 includes, instead of the first holder 21, a supply unit 25 for supplying the first member 101. The supply unit 25 includes a cassette 26 that accommodates the first member 101 having a predetermined length, and a feeding roller 27 for feeding the first member 101 accommodated in the cassette 26 toward the conveying path 15. Also with the laminating apparatus 2 according to the variation, the second roll 112 and the lamination rollers 50 can be operated by the single common motor 70, thereby reducing the cost of the laminating apparatus 2.

A laminating apparatus according to a variation may include a first transmission unit and a second transmission unit having configurations different from the first transmission unit and the second transmission unit described above. For example, detailed configurations of the first transmission unit and the second transmission unit such as the number of gears, gear ratios, branching states of gear trains, and positions of one-way clutches and torque limiters may differ from those of the first transmission unit and the second transmission unit described above. Furthermore, the first transmission unit and the second transmission unit may include, instead of one-way clutches, planetary gears or mechanisms including solenoids as means for preventing transmission of a rotational force in a specific direction.

A laminating apparatus according to a variation does not necessarily need to include the third conveying rollers 43 and the fourth conveying rollers 44. In the laminating apparatus according to the variation, the second conveying rollers 42 may be disposed at the positions of the third conveying rollers 43 or at the positions of the fourth conveying rollers 44.

A laminating apparatus according to a variation may not include the second cutting unit 69. In this case, a laminated member of the first member 101 and the second member 102 is discharged from the discharge opening 14 without being cut. The user may cut the discharged member outside the laminating apparatus, for example, using scissors.

In the embodiment and variations of the present invention, the common motor 70 is described as a single motor that rotates both the second roll 112 supported by the second holder 22, and the lamination rollers 50; however, the present invention is not limited thereto. For example, the first roll motor 81 may serve as the common motor 70, the first roll 111 may correspond to the second roll 112, the lamination rollers 50 may correspond to the first conveying rollers 41, and the first roll motor 81 may be a single motor that rotates both the first roll 111 supported by the first holder 21 and the first conveying rollers 41.

The image recording unit 30 of the laminating apparatus 1 includes the recording head 32 that ejects ink and records images according to a so-called serial inkjet method, but the image recording unit 30 is not limited to this configuration. For example, a recording unit of a laminating apparatus according to a variation may include a fixed inkjet recording head that records images according to a so-called line head method. Alternatively, a recording unit in a laminating apparatus according to a variation may be configured to record images using a so-called thermal head method. Alternatively, a recording unit in a laminating apparatus according to a variation may record images according to a so-called laser method in which toner is fixed to a recording medium using a laser beam.

### [Reference Signs List]

1, 2: laminating apparatus 21: first holder (first supporting portion) 22: second holder (second supporting portion) 25: supply unit 30: image recording unit 50: lamination rollers 55, 56: locking portions 63: member sensor 64, 65, 66: width-direction sensors 70: common motor (drive source) 71, 77: first transmission unit 72, 75, 76, 78: second transmission unit 73: first transmission path 74: second transmission path 79: rotational shaft (rotating portion) 90: control unit 100: finished laminated product 101: first member 102: second member 111: first roll 112: second roll 211 through 217, 221 through 229, and 251 through 253: gears 231: one-way clutch 232: torque limiter (first torque limiter) 233: rotary encoder (detecting portion) 234: torque limiter (second torque limiter) 238: one-way clutch (transmission control unit) 243, 246: belts

## Claims

1. A laminating apparatus comprising:
a first supporting portion configured to support a first roll, the first roll being a first member that is wound into a roll;
a second supporting portion configured to support a second roll, the second roll being a second member that is wound into a roll;
an image recording unit configured to record an image on the first member that has been drawn out from the first roll;
a lamination roller configured to laminate the first member on which the image recording unit has recorded an image and the second member that has been drawn out from the second roll together; and
a single drive source configured to rotate both the second roll and the lamination roller.

2. The laminating apparatus according to claim 1,
wherein the drive source includes a rotating portion rotatable in a first direction and a second direction opposite the first direction,
wherein, when the rotating portion rotates in the first direction, the second member is conveyed in a direction for drawing out the second member from the second roll, and
wherein, when the rotating portion rotates in the second direction, the second member is conveyed in a direction for taking up the second member onto the second roll.

3. The laminating apparatus according to claim 1,
wherein the drive source includes a rotating portion rotatable in a first direction and a second direction opposite the first direction, and
wherein the laminating apparatus further comprises:
a first transmission unit configured to transmit, to the second roll, a rotational force of the rotating portion in the first direction as a rotational force in a direction for taking up the second member; and
a second transmission unit configured to transmit, to the lamination roller, a rotational force of the rotating portion in the first direction as a rotational force in a direction for drawing out the second member.

4. The laminating apparatus according to claim 3,
wherein the first transmission unit is configured to transmit, to the second roll, a rotational force of the rotating portion in the second direction as a rotational force in a direction for taking up the second member, and
wherein the second transmission unit is configured to transmit, to the lamination roller, a rotational force of the rotating portion in the second direction as a rotational force in a direction for taking up the second member.

5. The laminating apparatus according to claim 3,
wherein the first transmission unit is configured to transmit, to the second roll, a rotational force of the rotating portion in the second direction as a rotational force in a direction for taking up the second member, and
wherein the second transmission unit is configured to transmit, to the lamination roller, a rotational force of the rotating portion in the second direction as a rotational force in a direction for drawing out the second member.

6. The laminating apparatus according to claim 3,
wherein the first transmission unit is configured to transmit, to the second roll, a rotational force of the rotating portion in the second direction as a rotational force in a direction for taking up the second member, and
wherein the second transmission unit includes:
a transmission control unit configured to prevent, when the rotating portion rotates in the second direction, a rotational force of the rotating portion from being transmitted to the lamination roller.

7. The laminating apparatus according to claim 3,
wherein the first transmission unit is configured to transmit, to the second roll, a rotational force of the rotating portion in the second direction as a rotational force in a direction for taking up the second member, and
wherein the second transmission unit includes:
a locking portion configured to lock, when the rotating portion rotates in the second direction, rotation of the lamination roller.

8. The laminating apparatus according to any one of claims 4 to 7,
wherein the first transmission unit includes a first transmission path and a second transmission path for transmitting a rotational force of the rotating portion to the second roll,
wherein the first transmission path includes a torque limiter along a path,
wherein the second transmission path does not include a torque limiter along a path,
wherein, when the rotating portion rotates in the first direction, a rotational force limited by the torque limiter is transmitted to the second roll via the first transmission path, and
wherein, when the rotating portion rotates in the second direction, a rotational force not limited by the torque limiter is transmitted to the second roll via the second transmission path.

9. The laminating apparatus according to claim 8,
wherein the second transmission path includes a one-way clutch along a path, and
wherein the first transmission unit further includes a detecting portion disposed at least one of: downstream relative to the torque limiter along the first transmission path; and downstream relative to the one-way clutch along the second transmission path, the detecting portion being configured to detect a rotated amount of a member within the first transmission unit.

10. The laminating apparatus according to claim 3,
wherein the second transmission unit includes a torque limiter.

11. The laminating apparatus according to claim 3,
wherein each of the first transmission unit and the second transmission unit includes at least one of a gear and a belt.

12. The laminating apparatus according to claim 1,
wherein the drive source includes a single motor.

13. The laminating apparatus according to claim 2,
wherein, when the rotating portion rotates in the second direction in a state where an amount of the second member wound into the second roll is minimum, a rotational force is applied to the second roll and the lamination roller such that a circumferential speed of the second member wound on the second roll becomes greater than a circumferential speed of the lamination roller.

14. The laminating apparatus according to claim 1,
wherein the drive source includes a rotating portion rotatable in a first direction and a second direction opposite the first direction,
wherein the laminating apparatus further comprises:
a first transmission unit configured to transmit a rotational force of the rotating portion to the second roll; and
a second transmission unit configured to transmit a rotational force of the rotating portion to the lamination roller,
wherein the first transmission unit includes a first torque limiter, the first transmission unit being configured to transmit a rotational force of the rotating portion in the first direction to the second roll via the first torque limiter and transmit a rotational force of the rotating portion in the second direction to the second roll without passing through the first torque limiter, and
wherein the second transmission unit includes a second torque limiter, the second transmission unit being configured to transmit each of a rotational force of the rotating portion in the first direction and a rotational force of the rotating portion in the second direction to the lamination roller via the second torque limiter.

15. The laminating apparatus according to claim 1, further comprising:
a control unit,
wherein the control unit is configured to perform, as a skew correction control for the second member:
at least one draw-out operation, the draw-out operation including drawing out the second member from the second roll; and
at least one take-up operation, the take-up operation including taking up the second member onto the second roll.

16. The laminating apparatus according to claim 15, further comprising:
a member sensor disposed downstream relative to the lamination roller, the member sensor being configured to detect the second member,
wherein the control unit is configured to perform:
switching, based on an output signal from the member sensor, between execution of the draw-out operation and execution of the take-up operation.

17. The laminating apparatus according to claim 16, further comprising:
a width-direction sensor configured to detect a position in a width direction of the second member,
wherein the control unit is configured to perform:
detecting, based on an output signal from the width-direction sensor, a skewed state of the second member; and
controlling, based on the detected skewed state, execution of the draw-out operation and the take-up operation.

18. A laminating apparatus comprising:
a supply unit configured to supply a first member;
a second supporting portion configured to support a second roll, the second roll being a second member that is wound into a roll;
an image recording unit configured to record an image on the first member supplied by the supply unit;
a lamination roller configured to laminate the first member on which the image recording unit has recorded an image and the second member that has been drawn out from the second roll together; and
a single drive source configured to rotate both the second roll and the lamination roller.
